# EUROPÄISCHE PATENTSCHRIFT

(11) **EP 4 197 834 B1**
(45) Veröffentlichungstag und Bekanntmachung des Hinweises auf die Patenterteilung: **08.05.2024**
(21) Anmeldenummer: 21216134.3
(22) Anmeldetag: 20.12.2021
(51) Int. Cl.: B60H 1/32, F04B 27/10, F04B 35/04, F25B 49/02, F04B 39/06, F25B 31/00

(54) **TRANSPORTKÄLTEMASCHINE, KOFFERAUFBAU UND VERFAHREN ZUM BETREIBEN EINER TRANSPORTKÄLTEMASCHINE**
TRANSPORT REFRIGERATING MACHINE, CASE ASSEMBLY AND METHOD FOR OPERATING A TRANSPORT REFRIGERATING MACHINE
MACHINE À RÉFRIGÉRER DE TRANSPORT, COFFRE ET PROCÉDÉ DE FONCTIONNEMENT D'UNE MACHINE À RÉFRIGÉRER DE TRANSPORT

(43) Veröffentlichungstag der Anmeldung: 21.06.2023
(73) Patentinhaber: Schmitz Cargobull AG, 48341 Altenberge (DE)
(72) Erfinder: Flacke, Norbert, 45894 Gelsenkirchen (DE); Holtkamp, Christian, 48153 Münster (DE); Tenbrock, Rolf, 48683 Ahaus (DE); Nienhaus, Andreas, 48653 Coesfeld (DE); Schanzmann, Martin, 46395 Bocholt (DE); Debbrecht, Jörg, 49124 Georgsmarienhütte (DE); Drommelschmidt, Nick, 46395 Bocholt (DE)
(74) Vertreter: Cohausz & Florack

(56) Entgegenhaltungen:
- EP-A1- 3 346 134
- EP-A2- 1 724 916
- WO-A1-2014/091018
- WO-A1-2017/176729
- US-A1- 2003 230 101
- US-B2- 6 604 372

## Beschreibung

Die Erfindung betrifft eine Transportkältemaschine zum Kühlen und/oder Heizen eines Laderaums eines Kofferaufbaus eines Nutzfahrzeugs, vorzugsweise Lastkraftwagens, Anhängers oder Sattelaufliegers, mit einem Wärmetauscher zum Übertragen von Wärme zwischen dem Laderaum und einem den Wärmetauscher durchströmenden Kältemittel, mit einem Verdichter zum Verdichten des den Wärmetauscher durchströmten Kältemittels und Versorgen des Wärmetauschers mit Kältemittel und mit einem elektrischen Antriebsmotor zum Antreiben des Verdichters, wobei der Antriebsmotor und der Verdichter in einem gemeinsamen Gehäuse aufgenommen sind und wobei das Gehäuse wenigstens einen Kältemitteleingang zum Einströmen des den Wärmetauscher durchströmten Kältemittels in das Gehäuse und wenigstens einen Kältemittelausgang zum Ausströmen des den Antriebsmotor wenigstens abschnittsweise umströmten und von dem Verdichter verdichteten Kältemittels aus dem Gehäuse aufweist. Zudem betrifft die Erfindung einen Kofferaufbau für ein Nutzfahrzeug, vorzugsweise Lastkraftwagen, Anhänger oder Sattelauflieger, mit einem Laderaum zur Aufnahme von Ladung und mit einer Transportkältemaschine zum Kühlen und/oder Heizen des Laderaums. Schließlich betrifft die Erfindung ein Verfahren zum Betreiben einer Transportkältemaschine. Dokumente WO 2017/176729A1, WO 2014/091018A1 und EP 1724916A2 zeigen relevante Transportkältemaschinen.

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, die einen Laderaum umgrenzen, welcher der Aufnahme der zu transportierenden Ladung dient. So sind beispielsweise Planenaufbauten bekannt, die wenigstens eine Plane zum Verschließen wenigstens einer Seite und/oder eines Dachs des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände, das Dach und die Stirnwand typischerweise durch feste Wände verschlossen. Die Rückwand wird bei Kofferaufbauten dagegen meist durch zwei Flügeltüren, ein Rolltor oder dergleichen gebildet, um den Laderaum darüber von hinten beladen zu können. Da Kofferaufbauten geschlossen sind und häufig eine hohe thermische Isolation bereitstellen, sind sie in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten temperaturgeführten Transport geeignet.

Bei temperaturgeführten Transporten ist sicherzustellen, dass die Temperatur der temperaturempfindlichen Güter eine von den jeweiligen Gütern abhängige Temperaturobergrenze nicht übersteigt und/oder Temperaturuntergrenze nicht unterschreitet, um Qualitätsminderungen der Güter zu verhindern. So kann es etwa beim Transport von tiefgekühlten Lebensmitteln erforderlich sein, die Temperatur im Laderaum unterhalb von beispielsweise -20 °C zu halten. Bei frostempfindlichem Transportgut kann es etwa im Winter bei niedrigen Umgebungstemperaturen erforderlich sein, die Laderaumtemperatur oberhalb von beispielsweise 0 °C zu halten. Daher weisen viele der für den temperaturgeführten Transport eingesetzten Kofferaufbauten eine sogenannte Transportkältemaschine auf, mit der ein aktives Kühlen und/oder Heizen der in dem Laderaum enthaltenen Atmosphäre und somit der in dem Laderaum aufgenommenen Güter bzw. Ladung erfolgen kann.

Transportkältemaschinen weisen typischerweise einen dem Laderaum zugeordneten Wärmetauscher, einen Verdichter, einen der Umgebung zugeordneten Wärmeübertrager sowie eine Drosseleinrichtung auf, die beispielsweise als Stellventil ausgebildet sein kann. Dabei wird im Kühlbetrieb der Transportkältemaschine Kältemittel von dem Verdichter verdichtet und das verdichtete Kältemittel dem Wärmeübertrager zugeführt. In dem Wärmeübertrager wird das Kältemittel unter Abgabe von Wärme an die den Kofferaufbau umgebende Atmosphäre kondensiert und mithin verflüssigt. Das verflüssigte Kältemittel wird dann der Drosseleinrichtung und anschließend dem Wärmetauscher zugeführt, wobei das verflüssigte Kältemittel expandiert und dabei einem getrennt von dem Kältemittel durch den Wärmetauscher geleiteten Strom der im Laderaum enthaltenen Atmosphäre Wärme entzieht. Das expandierte Kältemittel wird dann wieder zurück zum Verdichter geführt.

Zum Heizen des Laderaums weisen viele Transportkältemaschinen eine typischerweise elektrische Heizeinrichtung auf, mittels der der durch die Heizeinrichtung geleitete Strom der Laderaumatmosphäre erwärmt werden kann. Alternativ oder zusätzlich sind manche Transportkältemaschinen auch derart ausgebildet, dass sie zum Heizen des Laderaums nach Art einer Wärmepumpe betrieben werden können. Im Gegensatz zum Kühlbetrieb wird im Heizbetrieb der Transportkältemaschine das Kältemittel dann in dem dem Laderaum zugeordneten Wärmetauscher unter Abgabe von Wärme an den Strom der Laderaumatmosphäre kondensiert und in dem der Umgebung zugeordneten Wärmeübertrager unter Aufnahme von Wärme aus der Umgebung expandiert.

Zum Antreiben des Verdichters ist häufig ein elektrischer Antriebsmotor vorgesehen. Dabei werden nach der Art der Kombination von Verdichter und Antriebsmotor verschiedene Verdichtertypen unterschieden. Einerseits sind sogenannte "offene Verdichter" bekannt, bei denen der Verdichter und der Antriebsmotor in separaten Gehäusen aufgenommen sind. Bei offenen Verdichtern ist typischerweise die Antriebswelle des Verdichters durch eine abgedichtete Wellendurchführung hindurch aus dem Verdichtergehäuse herausgeführt. Nachteilig daran ist, dass es an der Wellendurchführung aufgrund der Relativbewegung zwischen Antriebswelle und Gehäuse trotz der Abdichtung zur Leckage des im Innenraum des Verdichtergehäuses unter Druck an der Wellendurchführung anstehenden Kältemittels kommt.

Andererseits sind sogenannte "hermetische Verdichter" bekannt. Diese zeichnen sich typischerweise dadurch aus, dass der Verdichter und der Antriebsmotor in einem gemeinsamen Gehäuse aufgenommen sind, sodass das vorstehend beschriebene Leckageproblem nicht auftritt. Dabei kann zwischen sogenannten "vollhermetischen Verdichtern" und "halbhermetischen Verdichtern" unterschieden werden. Bei halbhermetischen Verdichtern kann das gemeinsame Gehäuse von Antriebsmotor und Verdichter geöffnet und wieder dicht verschlossen werden, etwa zu Reparaturzwecken. Im Gegensatz dazu kann das Gehäuse von vollhermetischen Verdichtern, das etwa durch Verschweißen hergestellt sein kann, ausschließlich irreversibel geöffnet werden.

Unabhängig von einer halbhermetischen oder vollhermetischen Ausbildung wird bei hermetischen Verdichtern der Antriebsmotor typischerweise von dem im Kältekreislauf geführten Kältemittel umströmt und so auf einfache und kostengünstige Weise gekühlt. Bei entsprechend gekühlten Antriebsmotoren kommt es jedoch unter bestimmten Bedingungen, etwa bei hohen Umgebungstemperaturen, zur Überhitzung des Antriebsmotors, was zu Schäden auch an anderen Komponenten der Transportkältemaschine führen kann. Um dies zu verhindern, weisen manche Antriebsmotoren eine Motorschutzeinrichtung, etwa in Form eines Bimetallschalters, auf, die die Stromzufuhr zum Antriebsmotor bei Überschreiten einer maximal zulässigen Motortemperatur unterbricht. Dies führt jedoch typischerweise zu einem längeren Ausfall der gesamten Transportkältemaschine und hat mithin nicht selten eine Beschädigung bzw. Qualitätsminderung der transportierten Ladung zur Folge.

Transportkältemaschinen müssen in der Praxis also vielen unterschiedlichen, teils widerstreitenden Anforderungen gerecht werden. Zum einen sind der Austritt von Kältemittel in die Umwelt sowie Schäden an der Transportkältemaschine zu vermeiden. Zum anderen ist sicherzustellen, dass die transportierte Ladung stets hinreichend gekühlt und/oder geheizt wird. Und nicht zuletzt sollen auch eine kostengünstige Herstellung und ein kostengünstiger Betrieb der Transportkältemaschine möglich sein. Diesen Anforderungen werden die bekannten Transportkältemaschinen bisher nicht in zufriedenstellendem Maße gerecht.

Vor diesem Hintergrund liegt der vorliegenden Erfindung die Aufgabe zugrunde, die Transportkältemaschine, den Kofferaufbau und das Verfahren jeweils der eingangs genannten und zuvor näher erläuterten Art derart auszugestalten und weiterzubilden, dass bei hoher Betriebssicherheit und geringen Kosten die notwendige Kühlleistung und/oder Heizleistung zuverlässig bereitgestellt werden kann.

Diese Aufgabe ist bei einer Transportkältemaschine gemäß Anspruch 1 dadurch gelöst, dass eine Messeinrichtung zur Messung wenigstens eines für eine Motortemperatur des Antriebsmotors indikativen Temperaturmesswerts und eine Steuereinrichtung zum Bewirken wenigstens einer den Antriebsmotor kühlenden Kühlmaßnahme und Beenden der Kühlmaßnahme jeweils in Abhängigkeit eines von der Messeinrichtung gemessenen und für eine Motortemperatur des Antriebsmotors indikativen Temperaturmesswerts vorgesehen sind, der wenigstens eine Temperaturmesswert der Messwert einer Gehäusetemperatur des Gehäuses ist.

Die genannte Aufgabe ist ferner bei einem Kofferaufbau gemäß Anspruch 11 dadurch gelöst, dass die Transportkältemaschine nach einem der Ansprüche 1 bis 10 ausgebildet ist.

Schließlich ist die genannte Aufgabe gemäß Anspruch 12 gelöst durch ein Verfahren zum Betreiben einer Transportkältemaschine, vorzugsweise nach einem der Ansprüche 1 bis 10, mit einem Wärmetauscher, einem Verdichter und einem den Verdichter antreibenden elektrischen Antriebsmotor, wobei der Antriebsmotor und der Verdichter in einem gemeinsamen Gehäuse aufgenommen sind,
- bei dem einem Kältemittel in dem Wärmetauscher Wärme zugeführt und/oder entzogen wird,
- bei dem das den Wärmetauscher durchströmte Kältemittel durch wenigstens einen Kältemitteleingang des Gehäuses in das Gehäuse einströmt,
- bei dem das in das Gehäuse eingeströmte Kältemittel den Antriebsmotor wenigstens abschnittsweise umströmt und von dem Verdichter verdichtet wird,
- bei dem das von dem Verdichter verdichtete Kältemittel durch wenigstens einen Kältemittelausgang des Gehäuses aus dem Gehäuse strömt,
- bei dem das aus dem Gehäuse ausgeströmte Kältemittel dem Wärmetauscher zugeführt wird und
- bei dem eine den Antriebsmotor kühlende Kühlmaßnahme in Abhängigkeit eines für eine Motortemperatur des Antriebsmotors indikativen Temperaturmesswerts bewirkt und in Abhängigkeit eines für eine Motortemperatur des Antriebsmotors indikativen Temperaturmesswerts beendet wird.

Der besseren Verständlichkeit halber und zur Vermeidung von unnötigen Wiederholungen werden nachfolgend die Transportkältemaschine, der Kofferaufbau und das Verfahren zum Betreiben einer Transportkältemaschine gemeinsam beschrieben, ohne jeweils im Einzelnen zwischen der Transportkältemaschine, dem Kofferaufbau und dem Verfahren zu unterscheiden. Für den Fachmann ergibt sich aber dennoch anhand des Kontextes, welches Merkmal jeweils hinsichtlich der Transportkältemaschine, des Kofferaufbaus und/oder des Verfahrens relevant ist.

Es ist also vorgesehen, dass, insbesondere von der Messeinrichtung, wenigstens ein Temperaturmesswert gemessen wird, der indikativ für eine Motortemperatur des Antriebsmotors ist. In Abhängigkeit eines solchen gemessenen, für eine Motortemperatur des Antriebsmotors indikativen Temperaturmesswerts wird, insbesondere von der Steuereinrichtung, wenigstens eine Kühlmaßnahme zum Kühlen des Antriebsmotors bewirkt. So kann bei Antriebsmotoren ohne Motorschutzeinrichtung bei drohender Überhitzung des Antriebsmotors dieser entgegengewirkt und mithin eine Beschädigung des Antriebsmotors sowie ein dadurch bedingter Ausfall der Transportkältemaschine sicher vermieden werden. Bei Antriebsmotoren mit Motorschutzeinrichtung kann auf diese Weise vermieden werden, dass es zu einem Auslösen der Motorschutzeinrichtung und mithin zu einer längeren Unterbrechung der Kühlleistung und/oder Heizleistung der Transportkältemaschine kommt.

Weiter ist vorgesehen, dass die bewirkte Kühlmaßnahme ebenfalls in Abhängigkeit eines gemessenen, für eine Motortemperatur des Antriebsmotors indikativen Temperaturmesswerts, insbesondere von der Steuereinrichtung, wieder beendet wird. So kann sichergestellt werden, dass die Kühlmaßnahme nur so lange aktiv ist, wie es tatsächlich erforderlich ist, um ein Überhitzen des Antriebsmotors und/oder ein Auslösen der Motorschutzeinrichtung zu vermeiden. Auf diese Weise werden je nach Art der angewandten Kühlmaßnahme der Energiebedarf der Transportkältemaschine minimiert und/oder Schäden an der transportierten Ladung durch zu hohe und/oder zu niedrige Temperaturen im Laderaum effektiv vermieden. Der wenigstens eine Temperaturmesswert ist indikativ für eine Motortemperatur des Antriebsmotors.

Zum Bewirken und Beenden der wenigstens einen Kühlmaßnahme muss nicht zwingend eine neue, vorher nicht stattfindende Kühlmaßnahme ausgelöst und danach wieder komplett eingestellt werden. Vielmehr kann auch vorgesehen sein, dass eine bereits stattfindende Kühlmaßnahme zunächst verstärkt und dann die Verstärkung der entsprechenden Kühlmaßnahme wieder eingestellt wird. Unabhängig davon kann es sich bei der wenigstens einen Kühlmaßnahme grundsätzlich um eine solche handeln, die eine Unterbrechung der von der Transportkältemaschine zum Kühlen und/oder Heizen des Laderaums bereitgestellten Kühlleistung und/oder Heizleistung zur Folge hat. Um jedoch einen Schaden an der Ladung möglichst sicher verhindern zu können, kann es sich besonders anbieten, wenn die wenigstens eine Kühlmaßnahme einen unterbrechungsfreien Kühlbetrieb und/oder Heizbetrieb der Transportkältemaschine ermöglicht.

Zur Erreichung eines hohen Verdichtungsenddrucks kann der Verdichter zweckmäßig als Verdrängerverdichter, insbesondere zum Verdichten des Kältemittels durch Verkleinerung des Verdichtungsraums, ausgebildet sein. Alternativ oder zusätzlich kann der Verdichter grundsätzlich einfach und kostengünstig beispielsweise als Kolbenverdichter oder Schraubenverdichter ausgebildet sein. Hinsichtlich einer hohen Laufzeit und kompakten Ausgestaltung ist es jedoch besonders bevorzugt, wenn der Verdichter als Scrollverdichter ausgebildet ist. Ein Scrollverdichter weist typischerweise zwei ineinandergreifende Spiralen auf, wobei die eine Spirale relativ zu der anderen auf einer Kreisbahn bewegt wird.

Unter einem elektrischen Antriebsmotor wird vorzugsweise ein solcher verstanden, dem elektrische Energie zugeführt wird und der die elektrische Energie in kinetische Energie umwandelt und die kinetische Energie bereitstellt. Unabhängig davon kann zur Kraftübertragung vom Antriebsmotor auf den Verdichter zweckmäßig die Abtriebswelle des Antriebsmotors mit der Antriebswelle des Verdichters, vorzugsweise unmittelbar, verbunden sein. Dies kann auch eine einteilige Ausbildung von Abtriebswelle des Antriebsmotors und Antriebswelle des Verdichters einschließen. Alternativ oder zusätzlich kann es sich hinsichtlich einer kompakten Ausgestaltung auch anbieten, wenn die Abtriebswelle des Antriebsmotors und die Antriebswelle des Verdichters wenigstens im Wesentlichen kollinear angeordnet sind.

Der Antriebsmotor und der Verdichter sind in dem gemeinsamen Gehäuse aufgenommen. Bei dem Verdichter kann es sich also vorzugsweise um einen hermetischen Verdichter handeln. Unabhängig davon kann das Gehäuse grundsätzlich aus mehreren miteinander lösbar verbundenen Teilen gebildet sein und/oder wenigstens eine wiederverschließbare Öffnung aufweisen. Dann ist der Verdichter also vorzugsweise als halbhermetischer Verdichter ausgebildet. Dies ermöglicht Reparaturen an dem Verdichter und dem Antriebsmotor. Hinsichtlich eines geringen Gewichts kann es sich jedoch besonders anbieten, wenn das Gehäuse nicht beschädigungsfrei geöffnet werden kann, wenn der Verdichter also vorzugsweise als vollhermetischer Verdichter ausgebildet ist. Unabhängig davon können der Antriebsmotor und der Verdichter auch zweckmäßig in einem gemeinsamen Aufnahmeraum des Gehäuses angeordnet sein.

Das Gehäuse weist den wenigstens einen Kältemitteleingang, durch den das den Wärmetauscher durchströmte Kältemittel in das Gehäuse einströmen kann, und den wenigstens einen Kältemittelausgang auf, durch den das Kältemittel wieder aus dem Gehäuse ausströmen kann, nachdem es den Antriebsmotor wenigstens abschnittsweise umströmt hat und durch den Verdichter verdichtet wurde. Dabei können grundsätzlich der Antriebsmotor und der Verdichter so relativ zueinander angeordnet sein, dass der Antriebsmotor in Strömungsrichtung hinter dem Verdichter angeordnet ist. Hinsichtlich einer effektiven Kühlung des Antriebsmotors ist es allerdings bevorzugt, wenn der Antriebsmotor und der Verdichter derart angeordnet sind, dass das Kältemittel zuerst den Antriebsmotor umströmt und das den Antriebsmotor umströmte Kältemittel dann von dem Verdichter verdichtet wird. Dann kann zudem der Verdichter zweckmäßig einen Verdichtereingang zum Einströmen des den Antriebsmotor umströmten Kältemittels in den Verdichter aufweisen.

Zum Übertragen des wenigstens einen Temperaturmesswerts von der Messeinrichtung an die Steuereinrichtung können die Messeinrichtung und die Steuereinrichtung in einfacher Weise miteinander verkoppelt sein. Unabhängig davon kann das Bewirken und Beenden der Kühlmaßnahme in besonders einfacher und zuverlässiger Weise erfolgen, wenn es sich bei der Steuereinrichtung um eine elektronische Steuereinrichtung handelt.

Die Transportkältemaschine kann zweckmäßigerweise weiter einen Wärmeübertrager aufweisen. Der Wärmeübertrager kann dann dazu dienen, Wärme zwischen der Umgebung und dem den Wärmeübertrager durchströmenden Kältemittel zu übertragen, also vorzugsweise Wärme von der Umgebung auf das Kältemittel und/oder von dem Kältemittel auf die Umgebung zu übertragen. Dabei können der Wärmeübertrager und der Wärmetauscher grundsätzlich gleichartig ausgebildet sein und sich insbesondere dadurch unterscheiden, dass der Wärmetauscher dem Laderaum und der Wärmeübertrager der Umgebung zugeordnet ist. Alternativ oder zusätzlich kann die Transportkältemaschine ebenfalls zweckmäßig eine Drosseleinrichtung aufweisen, bei der es sich der Einfachheit halber um ein Expansionsventil handeln kann. In der Drosseleinrichtung kann dann das, vorzugsweise den Wärmeübertrager durchströmte und, dem Wärmetauscher zuzuführende und/oder den Wärmetauscher durchströmte, und vorzugsweise dem Wärmeübertrager zuzuführende, Kältemittel entspannt werden.

Gemäß einer besonders bevorzugten Ausgestaltung der Transportkältemaschine ist die Steuereinrichtung eingerichtet, die wenigstens eine Kühlmaßnahme zu bewirken, wenn der Temperaturmesswert zum Bewirken der Kühlmaßnahme größer als ein oberer Temperaturgrenzwert ist. Auf diese Weise kann die Kühlmaßnahme besonders zuverlässig bewirkt werden. Alternativ oder zusätzlich kann das Beenden der Kühlmaßnahme besonders zuverlässig erfolgen, wenn die Steuereinrichtung eingerichtet ist, die wenigstens eine Kühlmaßnahme zu beenden, wenn der Temperaturmesswert zum Beenden der Kühlmaßnahme kleiner als ein unterer Temperaturgrenzwert ist. Dabei wird unter dem Temperaturmesswert zum Bewirken der Kühlmaßnahme oder zum Beenden der Kühlmaßnahme vorzugsweise der Temperaturmesswert verstanden, in Abhängigkeit dessen die Kühlmaßnahme bewirkt oder beendet wird.

Wenn sowohl der obere als auch der untere Temperaturgrenzwert vorgesehen sind, können die Temperaturgrenzwerte der Einfachheit halber gleich groß sein. Besonders bevorzugt ist es jedoch, wenn der obere Temperaturgrenzwert größer als der untere Temperaturgrenzwert ist. Auf diese Weise kann ein übermäßig häufiges Aktivieren und Deaktivieren der Kühlmaßnahme verhindert und so der Verschleiß der beteiligten Bauteile verringert werden. Dies gilt umso mehr, wenn der obere Temperaturgrenzwert wenigstens 5 Kelvin, vorzugsweise wenigstens 10 Kelvin, weiter vorzugsweise wenigstens 15 Kelvin, größer als der untere Temperaturgrenzwert ist. Alternativ oder zusätzlich kann auch vorgesehen sein, dass der obere Temperaturgrenzwert höchstens 50 Kelvin größer ist als der untere Temperaturgrenzwert. So kann verhindert werden, dass die Kühlmaßnahme zu lange aktiv bleibt, was die Effizienz der Transportkältemaschine verringern und/oder zu einer unzulässig hohen und/oder niedrigen Temperatur im Laderaum führen kann. Vor demselben Hintergrund ist es besonders bevorzugt, wenn der obere Temperaturgrenzwert höchstens 30 Kelvin, vorzugsweise höchstens 20 Kelvin, größer ist als der untere Temperaturgrenzwert.

Erfindungsgemäß ist vorgesehen, dass der wenigstens eine Temperaturmesswert der Messwert einer Gehäusetemperatur des Gehäuses ist. So kann die Messeinrichtung auf besonders kostengünstige und konstruktiv einfache Weise realisiert werden, da die Messeinrichtung nicht innerhalb des Gehäuses untergebracht werden muss und/oder eine Öffnung für die Messeinrichtung im Gehäuse vorgesehen sein muss, was zu Leckageproblemen führen kann. Gleichzeitig spiegelt die Gehäusetemperatur die Motortemperatur des Antriebsmotors gut wieder, sodass eine präzise Steuerung der Kühlmaßnahme ermöglicht wird. Dabei kann die Realisierung der Messeinrichtung besonders einfach sein, wenn der wenigstens eine Temperaturmesswert der Messwert einer Gehäusetemperatur an einer Außenfläche des Gehäuses ist. Unabhängig davon kann auch vorgesehen sein, dass der wenigstens eine Temperaturmesswert der Messwert einer Gehäusetemperatur im Bereich des Antriebsmotors ist. Dann spiegelt der Temperaturmesswert die Motortemperatur besonders gut wieder.

Hinsichtlich einer starken Korrelation zwischen dem Temperaturmesswert und der Motortemperatur und mithin präzisen Steuerung der Kühlmaßnahme kann es alternativ oder zusätzlich auch vorteilhaft sein, wenn der Abstand des Antriebsmotors, vorzugsweise des Stators des Antriebsmotors, von dem zu messenden Gehäuseabschnitt höchstens fünfmal so groß ist wie die Wandstärke des Gehäuses in dem zu messenden Gehäuseabschnitt. Vor demselben Hintergrund ist es besonders bevorzugt, wenn der genannte Abstand höchstens dreimal, vorzugsweise höchstens doppelt, so groß ist, wie die Wandstärke des zu messenden Gehäuseabschnitts. Eine besonders präzise Steuerung der Kühlmaßnahme kann darüber hinaus erreicht werden, wenn der Antriebsmotor, vorzugsweise der Stator des Antriebsmotors, an dem zu messenden Gehäuseabschnitt anliegt. Dabei wird unter dem zu messenden Gehäuseabschnitt vorzugsweise der Abschnitt des Gehäuses verstanden, dessen Temperatur von der Messeinrichtung gemessen wird.

Alternativ oder zusätzlich kann die Messeinrichtung wenigstens im Wesentlichen außerhalb des Gehäuses angeordnet sein. So wird eine konstruktiv einfache und mithin kostengünstige Integration der Messeinrichtung vor allem bei vollhermetischen Verdichtern ermöglicht. Dies gilt umso mehr, wenn die Messeinrichtung ausschließlich außerhalb des Gehäuses angeordnet ist. Unabhängig von der Anordnung der Messeinrichtung kann vorgesehen sein, dass das Gehäuse gegen einen Überdruck von wenigstens 30 bar druckdicht ist. So kann verhindert werden, dass es zu einem Platzen des Gehäuses durch starkes Expandieren des das Gehäuse durchströmenden Kältemittels etwa infolge eines Ausfalls der Energiezufuhr oder einer anderen Störung kommt. Dabei kann ein Platzen besonders sicher verhindert werden, wenn das Gehäuse gegen einen Überdruck von wenigstens 60 bar, vorzugsweise wenigstens 80 bar, druckdicht ist.

Unabhängig von der Ausgestaltung des Gehäuses kann vorgesehen sein, dass die wenigstens eine Kühlmaßnahme eine Vergrößerung des den Antriebsmotor umströmenden Kältemittelmassenstroms umfasst. So kann der Antriebsmotor auf einfache Weise stärker gekühlt werden, ohne dass zusätzliche Kühleinrichtungen erforderlich wären. Dabei kann einfach und zweckmäßig eine Stelleinrichtung, etwa in Form eines Stellventils, zum Vergrößern und Verringern des den Antriebsmotor umströmenden Kältemittelmassenstroms vorgesehen sein, wobei die Steuereinrichtung zum Bewirken und Beenden der Kühlmaßnahme der Einfachheit halber mit der Stelleinrichtung verkoppelt sein kann.

Alternativ oder zusätzlich kann es sich anbieten, wenn der Verdichter einen Bypasseingang aufweist, durch den, insbesondere im Kühlbetrieb der Transportkältemaschine, ein Bypassmassenstrom des Kältemittels unter Umgehung des Antriebsmotors in den Verdichter einströmen kann, also vorzugsweise ohne den Antriebsmotor zu umströmen. Ein entsprechender Bypasseingang ist für viele Anwendungsfälle zweckmäßig. Zudem kann dann das Vergrößern des den Antriebsmotors umströmenden Kältemittelmassenstroms durch Verringerung des Bypassmassenstroms erfolgen. Dies hat den Vorteil, dass die Vergrößerung des den Antriebsmotor umströmenden Kältemittelmassenstroms ohne erhöhten Energiebedarf erfolgen kann. Dabei umfasst ein Verringern des Bypassmassenstroms insbesondere auch ein Unterbrechen des Bypassmassenstroms. Ein vollständiges Unterbrechen hat häufig sogar steuerungstechnische Vorteile. Unabhängig davon kann einfach und zweckmäßig eine Stelleinrichtung, etwa in Form eines Stellventils, zum Verringern und Vergrößern des Bypassmassenstroms vorgesehen sein, mit der die Steuereinrichtung zum Bewirken und Beenden der Kühlmaßnahme zweckmäßigerweise verkoppelt sein kann.

Der Bypasseingang kann als Mitteldruckeingang ausgebildet sein, durch den das Kältemittel, insbesondere im Kühlbetrieb der Transportkältemaschine, auf einem mittleren Druckniveau in den Verdichter einströmen kann. Die Einspeisung des Bypassmassenstroms auf einem mittleren Druckniveau kann als Zwischenkühlung fungieren, wodurch die insgesamt aufzuwendende Verdichterarbeit reduziert wird. Ganz grundsätzlich wird unter einem mittleren Druckniveau vorzugsweise ein solches verstanden, das zwischen dem Druckniveau an einem Verdichtereingang zum Einströmen des unverdichteten Kältemittels in den Verdichter und dem Druckniveau an einem Verdichterausgang zum Ausströmen des verdichteten Kältemittels aus dem Verdichter liegt.

Zur Effizienzsteigerung im Kühlbetrieb kann die Transportkältemaschine einen Economizer aufweisen. Der Economizer kann dann, insbesondere im Kühlbetrieb der Transportkältemaschine, Wärme von einem Hauptmassenstrom des von dem Verdichter verdichteten Kältemittels auf einen Nebenmassenstrom des von dem Verdichter verdichteten Kältemittels übertragen, und zwar durch Expandieren des Nebenmassenstroms. Dann kann, insbesondere im Kühlbetrieb der Transportkältemaschine, der Hauptmassenstrom dem Wärmetauscher zugeführt und der Nebenmassenstrom unter Umgehung des Wärmetauschers, also insbesondere ohne den Wärmetauscher zu durchströmen, zum Verdichter zurückgeführt werden. So kann dem den Wärmetauscher zu durchströmenden und, insbesondere in dem Wärmetauscher zu expandierenden, Hauptmassenstrom zusätzlich Wärme entzogen und so die Kühlleistung des Wärmetauschers erhöht werden. Dann kann es zusätzlich zweckmäßig sein, wenn die Steuereinrichtung eingerichtet ist, die Verringerung des in den Bypasseingang einströmenden Bypassmassenstroms durch eine Verringerung des Nebenmassenstroms zu bewirken. Dabei kann es zu einem einfachen Aufbau der Transportkältemaschine beitragen, wenn, insbesondere im Kühlbetrieb der Transportkältemaschine, der vom Economizer expandierte Nebenmassenstrom dem Bypasseingang, vorzugsweise dem Mitteldruckeingang, des Verdichters zugeführt wird. Dann kann also der in den Bypasseingang einströmende Bypassmassenstrom den vom Economizer expandierten Nebenmassenstrom umfassen. Unabhängig davon kann es für den Fall, dass die Transportkältemaschine einen Wärmeübertrager aufweist, zweckmäßig sein, wenn der Economizer dem Wärmeübertrager nachgeschaltet ist, und zwar insbesondere bezogen auf den Kühlbetrieb der Transportkältemaschine.

Der Economizer kann beispielsweise als sogenannter "Unterkühler-Economizer" ausgebildet sein. Dann kann der Economizer eine Drosseleinrichtung aufweisen, in der der Nebenmassenstrom entspannt werden kann. Zudem kann der Economizer dann einen der Drosseleinrichtung, insbesondere im Kühlbetrieb der Transportkältemaschine, nachgeschalteten Wärmetauscher aufweisen, in dem Wärme von dem Hauptmassenstrom auf den in der Drosseleinrichtung entspannten Nebenmassenstrom durch Expandieren des Nebenmassenstroms übertragen werden kann.

Alternativ zu einer Ausbildung als Unterkühler-Economizer kann der Economizer auch als sogenannter "Open-Flash-Economizer" ausgebildet sein. Dann kann der Economizer eine Drosseleinrichtung aufweisen, in der das von dem Verdichter verdichtete Kältemittel entspannt werden kann. Zudem kann der Economizer dann einen der Drosseleinrichtung, insbesondere im Kühlbetrieb der Transportkältemaschine, nachgeschalteten, vorzugsweise einbautenfreien, Behälter aufweisen, in dem das in der Drosseleinrichtung entspannte Kältemittel teilweise expandiert werden kann, sodass Wärme von dem flüssigen Teil des Kältemittels, dem Hauptmassenstrom, auf den expandierten Teil des Kältemittels, den Nebenmassenstrom, übertragen wird.

Alternativ oder zusätzlich zu einer Verringerung des Bypassmassenstroms kann das Vergrößern des den Antriebsmotor umströmenden Kältemittelmassenstroms durch eine Vergrößerung der Drehzahl des Verdichters erfolgen. So kann der Antriebsmotor im Wesentlichen ohne Zeitverzögerung stärker gekühlt werden. Die Erhöhung der Drehzahl des Verdichters bewirkt nämlich vorzugsweise unmittelbar eine Vergrößerung der Fördermenge des Verdichters und mithin des den Antriebsmotor umströmenden Kältemittelmassenstroms. Nachteilig ist jedoch, dass diese Kühlmaßnahme einen erhöhten Energieeinsatz erfordert.

Grundsätzlich unabhängig davon, ob die Vergrößerung des den Antriebsmotor umströmenden Kältemittelmassenstroms durch Vergrößerung der Drehzahl des Verdichters erfolgt, kann die Transportkältemaschine einfach und zweckmäßig einen elektrischen Generator, der den Antriebsmotor mit elektrischer Antriebsenergie versorgen kann, und einen Verbrennungsmotor aufweisen, der wiederum den Generator antreiben kann. Dann kann es sich weiter anbieten, wenn die Steuereinrichtung eingerichtet ist, die Vergrößerung der Drehzahl des Verdichters durch eine Vergrößerung der Drehzahl des Verbrennungsmotors zu bewirken. So kann einfach und zweckmäßig eine Vergrößerung der Drehzahl des Verdichters erreicht werden. Nachteilig ist jedoch, dass der Verbrauch des Verbrennungsmotors steigt. Zum Bewirken und Beenden der entsprechenden Kühlmaßnahme kann die Steuereinrichtung einfach und zweckmäßig mit dem Verbrennungsmotor, vorzugsweise einer Motorsteuerung des Verbrennungsmotors, verkoppelt sein.

Alternativ oder zusätzlich kann die Transportkältemaschine eine Strombegrenzungseinrichtung aufweisen, die zur Begrenzung der Stromstärke des dem Antriebsmotor zugeführten elektrischen Stroms, also vorzugsweise der Stromstärke, mit der der Antriebsmotor betrieben wird, ausgebildet ist. Dann kann die wenigstens eine Kühlmaßnahme eine Begrenzung der Stromstärke des dem Antriebsmotor zugeführten elektrischen Stroms durch die Strombegrenzungseinrichtung umfassen. Auf diese Weise kann die auf den Antriebsmotor wirkende Last ohne Steigerung des Energiebedarfs der Transportkältemaschine gesenkt und so der Antriebsmotor gekühlt werden. Vor diesem Hintergrund kann sich eine Beschränkung der Stromstärke auf höchstens 40 Ampere, vorzugsweise höchstens 35 Ampere, weiter vorzugsweise höchstens 30 Ampere, besonders anbieten. Allerdings kann die Beschränkung der Stromstärke auch dazu führen, dass die Transportkältemaschine nicht die geforderte Kühlleistung und/oder Heizleistung bereitstellen kann. Daher kann sich alternativ oder zusätzlich eine Beschränkung der Stromstärke auf wenigstens 5 Ampere, vorzugsweise wenigstens 15 Ampere, weiter vorzugsweise wenigstens 20 Ampere, anbieten. Unabhängig davon kann die Steuereinrichtung zum Bewirken und Beenden der entsprechenden Kühlmaßnahme der Einfachheit halber mit der Strombegrenzungseinrichtung verkoppelt sein.

Alternativ oder zusätzlich zu einer Strombegrenzungseinrichtung kann die Transportkältemaschine eine Stromunterbrechungseinrichtung zum Unterbrechen der Stromzufuhr des Antriebsmotors aufweisen. Dann kann die wenigstens eine Kühlmaßnahme eine Unterbrechung der Stromzufuhr des Antriebsmotors durch die Stromunterbrechungseinrichtung umfassen, sodass vorzugsweise der Antriebsmotor temporär ganz zum Stillstand kommt. So kann der Antriebsmotor besonders effektiv gekühlt werden. Jedoch besteht aufgrund des durch die entsprechende Kühlmaßnahme typischerweise bedingten Ausfalls der Kühlleistung und/oder Heizleistung der Transportkältemaschine ein erhöhtes Risiko der Schädigung der Ladung. Zum Bewirken und Beenden der entsprechenden Kühlmaßnahme kann die Steuereinrichtung zweckmäßigerweise mit der Stromunterbrechungseinrichtung gekoppelt sein. Unabhängig davon kann es sich bei der Stromunterbrechungseinrichtung und der Strombegrenzungseinrichtung grundsätzlich um unterschiedliche Einrichtungen handelt. Es kann jedoch auch bevorzugt sein, wenn es sich um dieselbe Einrichtung handelt.

Zum Kühlen des Antriebsmotors kann wenigstens eine Lüftereinheit vorgesehen sein, die einen das Gehäuse wenigstens abschnittsweise umströmenden Luftstrom erzeugen kann. So kann einfach und kostengünstig eine Kühlung des Antriebsmotors zusätzlich zu der durch das Kältemittel bewirkten Kühlung realisiert werden. Dabei kann eine besonders effiziente Kühlung durch die wenigstens eine Lüftereinheit erreicht werden, wenn diese derart angeordnet ist, dass der Luftstrom das Gehäuse im Bereich des Antriebsmotors wenigstens abschnittsweise umströmt. Unabhängig davon kann es sich bei Vorhandensein einer Lüftereinheit anbieten, wenn die wenigstens eine Kühlmaßnahme eine Vergrößerung der Lüfterleistung der wenigstens einen Lüftereinheit umfasst. So kann eine zusätzliche Kühlung des Antriebsmotors erfolgen, ohne dass der Kältemittelkreislauf beeinflusst wird. Jedoch muss zusätzliche Energie zur Vergrößerung der Lüfterleistung aufgewendet werden. Dabei umfasst eine Vergrößerung der Lüfterleistung vorzugsweise auch ein Aktivieren der deaktivierten Lüftereinheit. Unabhängig davon kann die Steuereinrichtung zum Bewirken und Beenden der entsprechenden Kühlmaßnahme zweckmäßigerweise mit der wenigstens einen Lüftereinheit gekoppelt sein.

Die zuvor genannten Vorteile kommen besonders zum Tragen, wenn die Transportkältemaschine, vorzugsweise der Antriebsmotor, eine Motorschutzeinrichtung aufweist, die die Stromzufuhr des Antriebsmotors bei Überschreiten einer maximal zulässigen Motortemperatur des Antriebsmotors unterbricht. Dann kann nämlich mithilfe der Messeinrichtung und der Steuereinrichtung ein Auslösen der Motorschutzeinrichtung vermieden werden. Dabei kann es hinsichtlich der angestrebten Funktionalität vorteilhaft sein, wenn es sich bei der Motorschutzeinrichtung einerseits und der Steuereinrichtung und/oder der Messeinrichtung andererseits um separate Einrichtungen handelt. Unabhängig davon kann es sich bei der Motorschutzeinrichtung der Einfachheit halber um einen Temperaturschalter, etwa in Form eines Bimetallschalters, handeln. Dabei wird unter einem Temperaturschalter vorzugsweise ein solcher verstanden, dessen Schaltzustand sich in Abhängigkeit einer Temperatur ändert.

Um ein Auslösen der Motorschutzeinrichtung sicher zu verhindern, kann es sich alternativ oder zusätzlich anbieten, wenn die Steuereinrichtung eingerichtet ist, die wenigstens eine Kühlmaßnahme unterhalb der maximal zulässigen Motortemperatur zu bewirken. Vorzugsweise bewirkt die Steuereinrichtung also die wenigstens eine Kühlmaßnahme, bevor die für die Motorschutzeinrichtung maßgebliche Temperatur die maximale Motortemperatur erreicht hat. Unabhängig davon bietet es sich aus dem genannten Grund besonders an, wenn das Bewirken der wenigstens einen Kühlmaßnahme wenigstens 5 Kelvin, vorzugsweise wenigstens 10 Kelvin, weiter vorzugsweise wenigstens 15 Kelvin, unterhalb der maximal zulässigen Motortemperatur erfolgt. Hinsichtlich eines geringen Verbrauchs und/oder einer Vermeidung von Schäden an der Ladung kann es alternativ oder zusätzlich vorteilhaft sein, wenn das Bewirken der wenigstens einen Kühlmaßnahme höchstens 30 Kelvin, vorzugsweise höchstens 25 Kelvin, weiter vorzugsweise höchstens 20 Kelvin, unterhalb der maximal zulässigen Motortemperatur erfolgt.

Gemäß einer besonders bevorzugten Ausgestaltung des Verfahrens ist vorgesehen, dass die wenigstens eine Kühlmaßnahme bewirkt wird, wenn der Temperaturmesswert zum Bewirken der Kühlmaßnahme größer als ein oberer Temperaturgrenzwert ist. Auf diese Weise wird die Kühlmaßnahme besonders zuverlässig bewirkt. Aus prinzipiell demselben Grund kann es sich alternativ oder zusätzlich anbieten, wenn die wenigstens eine Kühlmaßnahme beendet wird, wenn der Temperaturmesswert zum Beenden der Kühlmaßnahme kleiner als ein unterer Temperaturgrenzwert ist.

Unabhängig davon, ob ein oberer und/oder ein unterer Temperaturgrenzwert vorgesehen ist, kann die wenigstens eine Kühlmaßnahme eine Vergrößerung des den Antriebsmotor umströmenden Kältemittelmassenstroms umfassen. So wird der Antriebsmotor einfach, und ohne dass zusätzliche Einrichtungen zum Kühlen des Antriebsmotors erforderlich wären, stärker gekühlt. Dabei kann es sich besonders anbieten, wenn die Vergrößerung des den Antriebsmotor umströmenden Kältemittelmassenstroms durch eine Verringerung eines, insbesondere im Kühlbetrieb der Transportkältemaschine, unter Umgehung des Antriebsmotors in den Verdichter einströmenden Bypassmassenstroms des Kältemittels erreicht wird. So kann die Vergrößerung des den Antriebsmotor umströmenden Kältemittelmassenstroms ohne erhöhten Energiebedarf der Transportkältemaschine erfolgen. Weiter kann es sich anbieten, wenn der Bypassmassenstrom, insbesondere im Kühlbetrieb der Transportkältemaschine, auf einem mittleren Druckniveau in den Verdichter einströmt. So kann eine Zwischenkühlung realisiert und die Verdichterarbeit reduziert werden. Alternativ oder zusätzlich kann es zweckmäßig sein, wenn die Verringerung des Bypassmassenstroms durch eine Verringerung eines in einem Economizer expandierten Nebenmassenstroms erfolgt.

Alternativ oder zusätzlich zu einer Verringerung des Bypassmassenstroms kann die Vergrößerung des den Antriebsmotor umströmenden Kältemittelmassenstroms durch eine Vergrößerung der Drehzahl des Verdichters bewirkt werden. Dies hat den Vorteil, dass der Antriebsmotor im Wesentlichen ohne Zeitverzögerung auf effektive Weise stärker gekühlt werden kann. Dann kann es zusätzlich einfach und zweckmäßig sein, wenn die Vergrößerung der Drehzahl des Verdichters durch eine Vergrößerung der Drehzahl eines Verbrennungsmotors bewirkt wird, der einen Generator antreibt, welcher wiederum den Antriebsmotor mit elektrischer Energie versorgt.

Weiterhin kann die wenigstens eine Kühlmaßnahme eine Begrenzung der Stromstärke des dem Antriebsmotors zugeführten elektrischen Stroms, also vorzugsweise der Stromstärke, mit der der Antriebsmotor betrieben wird, umfassen. So wird die auf den Antriebsmotor wirkende Last gesenkt, ohne den Energiebedarf der Transportkältemaschine zu erhöhen. Allerdings kann die Begrenzung der Stromstärke dazu führen, dass die Transportkältemaschine nicht die geforderte Kühlleistung und/oder Heizleistung bereitstellen kann. Vor diesem Hintergrund kann sich eine Beschränkung der Stromstärke auf höchstens 40 Ampere, vorzugsweise höchstens 35 Ampere, weiter vorzugsweise höchstens 30 Ampere, und/oder wenigstens 5 Ampere, vorzugsweise wenigstens 15 Ampere, weiter vorzugsweise wenigstens 20 Ampere, anbieten. Alternativ oder zusätzlich zu einer Begrenzung der Stromstärke kann die wenigstens eine Kühlmaßnahme eine Unterbrechung der Stromzufuhr zum Antriebsmotor umfassen. So kann der Antriebsmotor besonders effektiv gekühlt werden. Es besteht jedoch auch ein erhöhtes Risiko der Qualitätsminderung der Ladung.

Schließlich kann die wenigstens eine Kühlmaßnahme eine Verstärkung eines Luftstroms umfassen, der das Gehäuse wenigstens abschnittsweise umströmt. So wird der Antriebsmotor ohne Beeinflussung des Kältemittelkreislaufs zusätzlich gekühlt, wobei jedoch ein zusätzlicher Energiebedarf entsteht. Dabei wird eine besonders effiziente Kühlung erreicht, wenn der Luftstrom das Gehäuse im Bereich des Antriebsmotors wenigstens abschnittsweise umströmt. Unabhängig davon kann eine Verstärkung des Luftstroms auch ein Bewirken eines vorher nicht existenten Luftstroms umfassen.

Um ein Überhitzen des Antriebsmotors und/oder ein Auslösen einer Motorschutzeinrichtung besonders sicher zu vermeiden, kann in Abhängigkeit eines Sekundärparameters eine den Antriebsmotor kühlende Sekundärmaßnahme bewirkt werden, während die wenigstens eine Kühlmaßnahme bereits aktiv ist. Dabei kann die Sekundärmaßnahme grundsätzlich eine oder mehrere der vorstehend im Zusammenhang mit der Kühlmaßnahme genannten Maßnahmen umfassen. Unabhängig davon kann es sich bei der Sekundärmaßnahme der Einfachheit halber um eine Verstärkung der bereits aktiven Kühlmaßnahme handeln. Hinsichtlich einer hohen Sicherheit gegen Überhitzung und/oder Auslösen eines Motorschutzes ist es jedoch besonders bevorzugt, wenn es sich bei der Sekundärmaßnahme und der bereits aktiven Kühlmaßnahme wenigstens.teilweise um unterschiedliche Maßnahmen handelt. In diesem Zusammenhang kann es besonders bevorzugt sein, wenn die Kühlmaßnahme eine Vergrößerung des den Antriebsmotor umströmenden Kältemittelmassenstroms durch Verringerung des Bypassmassenstroms umfasst und die Sekundärmaßnahme eine Vergrößerung des den Antriebsmotor umströmenden Kältemittelmassenstroms durch Vergrößerung der Drehzahl des Verdichters umfasst. Unabhängig von der Art der Sekundärmaßnahme kann die Sekundärmaßnahme zweckmäßig in Abhängigkeit eines für eine Motortemperatur des Antriebsmotors indikativen Temperaturmesswerts beendet werden, bei dem es sich der Einfachheit halber um den Temperaturmesswert zum Beenden der Kühlmaßnahme handeln kann. Alternativ oder zusätzlich kann die Sekundärmaßnahme einfach und zweckmäßig zusammen mit der Kühlmaßnahme beendet werden. Unabhängig davon kann die Sekundärmaßnahme in einfacher Weise durch die Steuereinrichtung bewirkt und/oder beendet werden.

Hinsichtlich des wenigstens einen Sekundärparameters kann es sich der Einfachheit halber anbieten, wenn dieser die Zeit seit Bewirken der wenigstens einen Kühlmaßnahme umfasst. Dann kann die Sekundärmaßnahme bewirkt werden, wenn die Kühlmaßnahme innerhalb einer vorgegebenen Zeitspanne keine oder keine hinreichende Abkühlung des Antriebsmotors bewirkt hat. Alternativ oder zusätzlich kann der wenigstens eine Sekundärparameter auch einen für eine Motortemperatur des Antriebsmotors indikativen Temperaturmesswert umfassen. Dies kann zu einer besonders effektiven Vermeidung von Überhitzung und/oder Auslösen des Motorschutzes beitragen. Dann kann die Sekundärmaßnahme bewirkt werden, wenn trotz aktiver Kühlmaßnahme die Temperatur des Motors weiter steigt und, vorzugsweise, einen vorgegebenen Sekundärgrenzwert übersteigt. Unabhängig davon kann es sich bei dem Temperaturmesswert zum Bewirken der Sekundärmaßnahme und dem Temperaturmesswert zum Bewirken und/oder Beenden der Kühlmaßnahme der Einfachheit halber um denselben Temperaturmesswert handeln.

Nachfolgend wird die Erfindung anhand einer lediglich ein bevorzugtes Ausführungsbeispiel darstellenden Zeichnung näher erläutert. In der Zeichnung zeigt jeweils schematisch:
- Fig. 1: ein Nutzfahrzeug mit einem erfindungsgemäßen Kofferaufbau umfassend eine erfindungsgemäße Transportkältemaschine in einer perspektivischen Ansicht,
- Fig. 2: das Nutzfahrzeug aus Fig. 1 in einer Ansicht von vorne und
- Fig. 3: ein Detail der Transportkältemaschine aus Fig. 2.

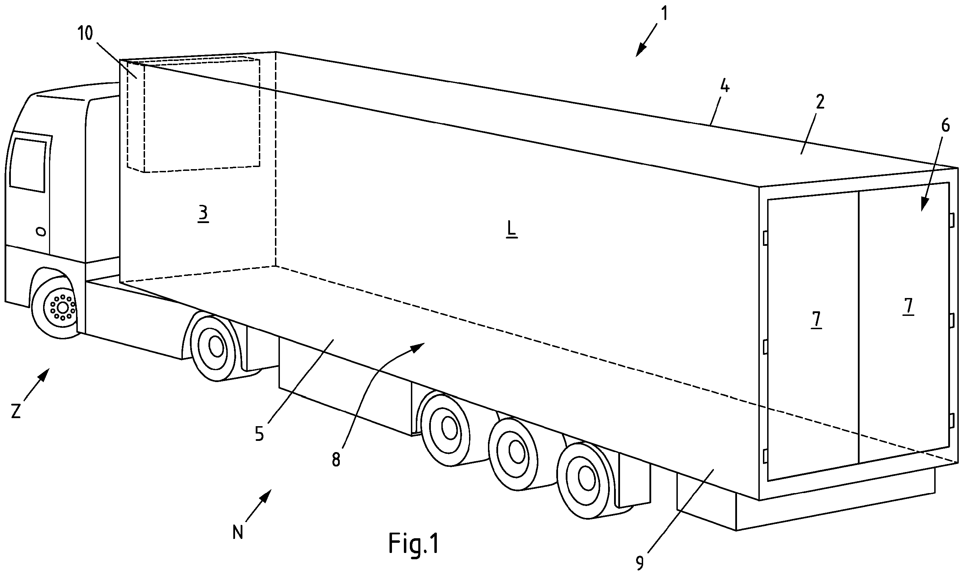

In der Fig. 1 ist ein Nutzfahrzeug N in Form eines Sattelaufliegers mit einem Nutzfahrzeugaufbau in Form eines Kofferaufbaus 1 in einer perspektivischen Ansicht dargestellt, das von einer Zugmaschine Z gezogen wird. Der Kofferaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Kofferaufbau 1 einen Laderaum 8, der nach unten durch einen Boden 9 begrenzt wird, auf dem Ladung abgestellt werden kann. Die Seitenwände 4,5, die Stirnwand 3, die Flügeltüren 7 und das Dach 2 werden wenigstens im Wesentlichen aus Paneelen gebildet.

An der Stirnwand 3 ist eine Transportkältemaschine 10 montiert, die überwiegend außerhalb des Laderaums 8 angeordnet ist. Die Transportkältemaschine 10 saugt über eine mit dem Laderaum 8 verbundene Einlassöffnung die in dem Laderaum 8 enthaltene, vorliegend aus Luft L bestehende Atmosphäre an und kühlt die angesaugte Luft L auf eine gewünschte Temperatur herunter. Anschließend wird die abgekühlte Luft L als Kühlluft wieder zurück in den Laderaum 8 geblasen. Auf diese Weise wird der Laderaum 8 gekühlt. Alternativ oder zusätzlich, etwa in Phasen, in denen der Laderaum 8 aufgrund veränderter Umgebungsbedingungen und/oder anderer Ladung zu heizen ist, kann die Transportkältemaschine 10 die angesaugte Luft L auch aufheizen.

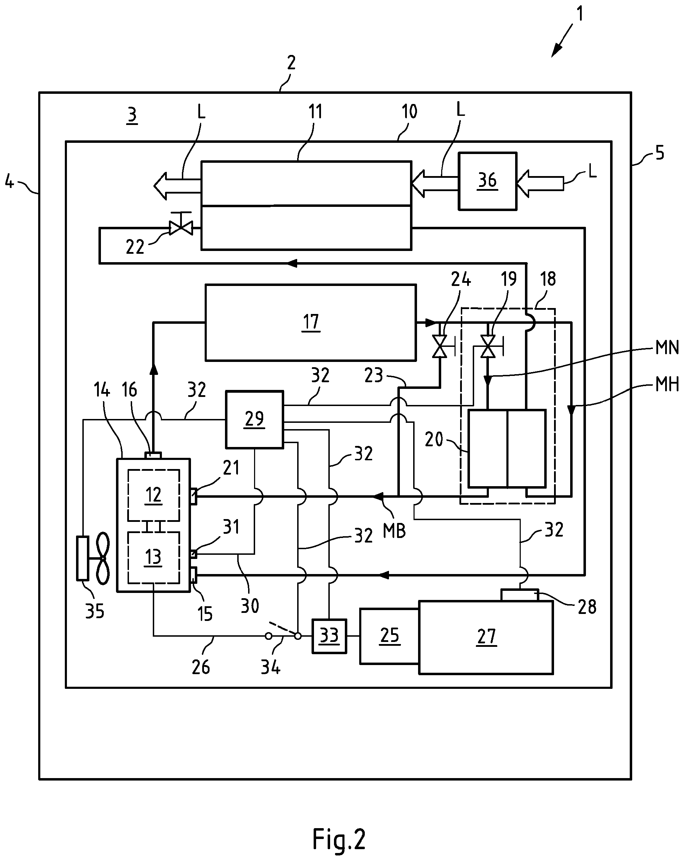

In der Fig. 2 ist der Kofferaufbau 1 in einer Ansicht von vorne dargestellt, wobei die Transportkältemaschine 10 im Kühlbetrieb und der vordere Teil der Verkleidung der Transportkältemaschine 10 der besseren Übersichtlichkeit wegen nicht dargestellt ist. Die Transportkältemaschine 10 weist einen Wärmetauscher 11 auf, durch den die aus dem Laderaum 8 angesaugte Luft L geleitet wird. Dabei wird parallel zu und getrennt von der angesaugten Luft L ein Kältemittel durch den Wärmetauscher 11 geleitet und währenddessen expandiert. So wird Wärme von der angesaugten Luft L auf das Kältemittel übertragen und mithin die Luft L abgekühlt.

Nach Durchströmen des Wärmetauschers 11 wird das expandierte Kältemittel einem Verdichter 12 zugeführt. Der Verdichter 12 ist zusammen mit einem diesen antreibenden elektrischen Antriebsmotor 13 in einem gemeinsamen Gehäuse 14 aufgenommen. Das Gehäuse 14 weist einen Kältemitteleingang 15 auf, durch den das in dem Wärmetauscher 11 expandierte Kältemittel in das Gehäuse 14 einströmt. Das in das Gehäuse 14 eingeströmte Kältemittel umströmt sodann den Antriebsmotor 13 und kühlt diesen so. Anschließend wird das Kältemittel von dem Verdichter 12 verdichtet, woraufhin es durch einen Kältemittelausgang 16 des Gehäuses 14 wieder aus dem Gehäuse 14 ausströmt.

Das aus dem Gehäuse 14 herausgeströmte Kältemittel wird dann einem vorliegend oberhalb des Verdichters 12 angeordneten Wärmeübertrager 17 zugeführt. In dem Wärmeübertrager 17 wird das verdichtete Kältemittel unter Abgabe von Wärme an die Umgebung kondensiert und mithin verflüssigt.

Im dargestellten und insoweit bevorzugten Ausführungsbeispiel wird das in dem Wärmeübertrager 17 verflüssigte Kältemittel anschließend durch einen Economizer 18 geleitet. Dabei wird das in dem Wärmeübertrager 17 verflüssigte Kältemittel in einen Hauptmassenstrom MH und einen Nebenmassenstrom MN aufgeteilt, wobei vorliegend der Hauptmassenstrom MH etwa 60 % bis 70 % und der Nebenmassenstrom MN etwa 30 % bis 40 % des gesamten Kältemittelmassenstroms ausmachen.

Der Nebenmassenstrom MN wird dann einer vorliegend als Stellventil ausgebildeten Economizer-Drosseleinrichtung 19 und anschließend einem Economizer-Wärmetauscher 20 zugeführt, der vorliegend als Gegenstromwärmetauscher ausgebildet ist. Der Hauptmassenstrom MH wird parallel zu und getrennt von dem Nebenmassenstrom MN durch den Economizer-Wärmetauscher 20 geleitet. Beim Durchströmen der Economizer-Drosseleinrichtung 19 wird der Nebenmassenstrom MN entspannt, sodass dieser beim anschließenden Durchströmen des Economizer-Wärmetauschers 20 unter Aufnahme von Wärme des Hauptmassenstroms MH expandiert. Auf diese Weise wird dem Hauptmassenstrom MH zusätzlich Wärme entzogen und dieser so unterkühlt. Bei dem Economizer 18 handelt es sich also um einen sogenannten Unterkühler-Economizer.

Nach dem Durchströmen des Economizers 18 wird der Nebenmassenstrom MN als Bypassmassenstrom MB zurück zum Verdichter 12 geführt und sodann wieder von dem Verdichter 12 verdichtet. Dabei strömt der Bypassmassenstrom MB nicht über den Kältemitteleingang 15 des Gehäuses 14 in den Verdichter 12 ein, sondern über einen Bypasseingang 21 des Verdichters 12, durch den der Bypassmassenstrom MB unter Umgehung des Antriebsmotors 13, also ohne den Antriebsmotor 13 zu umströmen, in den Verdichter 12 gelangt. Der Bypasseingang 21 ist vorliegend als Mitteldruckeingang ausgebildet, sodass der Bypassmassenstrom MB auf einem mittleren Druckniveau, also einem Druckniveau zwischen dem am Kältemitteleingang 15 und dem am Kältemittelausgang 16 anliegenden Druckniveau, in den Verdichter 12 einströmt.

Der Hauptmassenstrom MH wird nach dem Durchströmen des Economizers 18 einer dem Wärmetauscher 11 vorgeschalteten Drosseleinrichtung 22 zugeführt, die vorliegend ebenfalls als Stellventil ausgebildet ist. Beim Durchströmen der Drosseleinrichtung 22 wird das Kältemittel des Hauptmassenstroms MH entspannt, sodass das Kältemittel beim anschließenden Durchströmen des Wärmetauschers 11 expandiert und dabei der aus dem Laderaum 8 angesaugten Luft L Wärme entzieht.

Vorliegend weist die Transportkältemaschine 10 zudem eine Umgehungsleitung 23 auf, über die bei Bedarf ein Teil des in dem Wärmeübertrager 17 kondensierten Kältemittels unter Umgehung sowohl des Economizers 18 als auch des Wärmetauschers 11 zu dem als Mitteldruckeingang ausgebildeten Bypasseingang 21 und so in den Verdichter 12 geleitet werden kann. Dadurch kann die Zwischenkühlung im Verdichter 12 verstärkt und so die Verdichtungsendtemperatur am Kältemittelausgang 16 reduziert werden. Dabei ist zur Steuerung des durch die Umgehungsleitung 23 strömenden Kältemittelmassenstroms ein Stellventil 24 vorgesehen. Bei geöffneter Stellung des Stellventils 24 umfasst der Bypassmassenstrom MB also sowohl den im Economizer 18 expandierten Nebenmassenstrom NB als auch den durch die Umgehungsleitung 23 strömenden Kältemittelmassenstrom. Bei geschlossener Stellung des Stellventils 24 umfasst der Bypassmassenstrom MB lediglich den Nebenmassenstrom NB.

Der elektrische Antriebsmotor 13 wird im dargestellten und insoweit bevorzugten Ausführungsbeispiel von einem Generator 25 mit elektrischer Antriebsenergie versorgt. Dazu ist der Antriebsmotor 13 vorliegend über eine Versorgungsleitung 26 mit dem Generator 25 verbunden. Der Generator 25 wird wiederum von einem Verbrennungsmotor 27 angetrieben, der vorliegend als Dieselmotor ausgebildet ist und von einer Motorsteuerung 28 gesteuert wird.

Die Transportkältemaschine 10 weist weiter eine vorliegend elektronisch ausgebildete Steuereinrichtung 29 auf. Die Steuereinrichtung 29 ist über eine Datenleitung 30 mit einer Messeinrichtung 31 verkoppelt, die im dargestellten und insoweit bevorzugten Ausführungsbeispiel an dem Gehäuse 14 angebracht ist. Die Messeinrichtung 31 misst die Oberflächentemperatur des Gehäuses 14 im Bereich des Antriebsmotors 13 und übermittelt die gemessene Temperatur als Temperaturmesswert über die Datenleitung 30 an die Steuereinrichtung 29.

Im dargestellten und insoweit bevorzugten Ausführungsbeispiel ist die Steuereinrichtung 29 zudem über Datenleitungen 32 mit der als Stellventil ausgebildeten Economizer-Drosseleinrichtung 19 und der Motorsteuerung 28 des Verbrennungsmotors 27 verkoppelt. Außerdem ist die Steuereinrichtung 29 über Datenleitungen 32 mit einer Strombegrenzungseinrichtung 33 und einer Stromunterbrechungseinrichtung 34 verkoppelt, mittels denen der dem Antriebsmotor 13 über die Versorgungsleitung 26 zugeführte Strom begrenzt bzw. unterbrochen werden kann. Schließlich ist die Steuereinrichtung 29 über eine Datenleitung 32 mit einer Lüftereinheit 35 verkoppelt, die einen das Gehäuse 14 im Bereich des Antriebsmotors 13 wenigstens abschnittsweise umströmenden Luftstrom erzeugen kann.

Wenn die Steuereinrichtung 29 feststellt, dass der von der Messeinrichtung 31 gemessene Temperaturmesswert größer als ein vorgegebener oberer Temperaturgrenzwert ist, bewirkt die Steuereinrichtung 29 eine Kühlmaßnahme zum Kühlen des Antriebsmotors 13. Beispielsweise kann die Steuereinrichtung 29 das Schließen der Economizer-Drosseleinrichtung 19 bewirken. Dann strömt über den Bypasseingang 21 des Verdichters 12 weniger und über den Kältemitteleingang 15 entsprechend mehr Kältemittel in den Verdichter. Sofern das Stellventil 24 ebenfalls geschlossen ist, strömt der gesamte Kältemittelmassenstrom über den Kältemitteleingang 15 in den Verdichter 12. Mithin umströmt in der gleichen Zeit mehr Kältemittel den Antriebsmotors 13, sodass dieser stärker gekühlt wird.

Führt die Kühlmaßnahme zu einer hinreichenden Abkühlung des Antriebsmotors 13 und fällt mithin die von der Messeinrichtung 31 gemessene Temperatur des Gehäuses 14 unter einen vorgegebenen unteren Temperaturgrenzwert so stellt die Steuereinrichtung 29 die Kühlmaßnahme wieder ein. Dazu bewirkt die Steuereinrichtung 29 ein Öffnen der Economizer-Drosseleinrichtung 19, sodass das Kältemittel wieder im ursprünglichen Verhältnis über den Kältemitteleingang 15 und den Bypasseingang 21 in den Verdichter 12 strömt.

Kommt es jedoch nicht zu einer hinreichenden Abkühlung des Antriebsmotors 13 und mithin Senkung des Temperaturmesswerts, bleibt die Kühlmaßnahme aktiv. Stellt die Steuereinrichtung 29 dann zudem fest, dass seit Bewirken der Kühlmaßnahme eine vorgegebene Zeitspanne vergangen ist, bewirkt die Steuereinrichtung 29 eine Sekundärmaßnahme zum Kühlen des Antriebsmotors 13. Beispielsweise kann die Steuereinrichtung 29 über die Motorsteuerung 28 die Erhöhung der Drehzahl des Verbrennungsmotors 27 bewirken. Dies führt wiederum zu einer Vergrößerung der Drehzahl des Verdichters 12 und mithin zu einer zusätzlichen Steigerung des den Antriebsmotor 13 umströmenden Kältemittelmassenstroms. Fällt infolgedessen die von der Messeinrichtung 31 gemessene Temperatur des Gehäuses 14 unter den vorgegebenen unteren Temperaturgrenzwert, beendet die Steuereinrichtung 29 sowohl die Kühlmaßnahme als auch die Sekundärmaßnahme und bewirkt mithin ein Öffnen der Economizer-Drosseleinrichtung 19 und eine Verringerung der Drehzahl des Verbrennungsmotors 27 auf den ursprünglichen Wert.

Im dargestellten und insoweit bevorzugten Ausführungsbeispiel bewirkt die Steuereinrichtung 29 also als Kühlmaßnahme eine Verringerung des Bypassmassenstroms MB und als Sekundärmaßnahme eine Vergrößerung der Drehzahl des Verbrennungsmotors 27. Alternativ oder zusätzlich kann die Kühlmaßnahme und/oder die Sekundärmaßnahme aber auch eine Begrenzung oder Unterbrechung des dem Antriebsmotor 13 zugeführten Stroms durch die Strombegrenzungseinrichtung 33 oder die Stromunterbrechungseinrichtung 34 und/oder eine Vergrößerung der Lüfterleistung der Lüftereinheit 35 umfassen.

Um die aus dem Laderaum 8 angesaugte Luft L bedarfsweise erwärmen zu können, weist die Transportkältemaschine 10 im dargestellten und insoweit bevorzugten Ausführungsbeispiel eine Heizeinrichtung 36 auf. Die Heizeinrichtung 36 kann beispielsweise als elektrische Heizeinrichtung 36 ausgebildet und in einfacher Weise von dem Generator 25 mit elektrischer Energie versorgt werden. Vorliegend ist die Heizeinrichtung 36 in Strömungsrichtung der angesaugten Luft L vor dem Wärmetauscher 11 angeordnet, sodass die Luft L zunächst die Heizeinrichtung 36 und sodann den Wärmetauscher 11 durchströmt. Beim Durchströmen der Heizeinrichtung 36 umströmt die angesaugte Luft L nicht dargestellte Heizstäbe der Heizeinrichtung 36 und kann so erwärmt werden.

Die Heizeinrichtung 36 ist im Kühlbetrieb der Transportkältemaschine 10 typischerweise abgeschaltet. Dagegen ist im Heizbetrieb der Transportkältemaschine 10 typischerweise der Antriebsmotor 13 abgeschaltet, sodass der Kältemittelstrom des Kältemittelkreislaufs zum Erliegen kommt. Etwa aus regelungstechnischen Gründen kann es jedoch auch zweckmäßig sein, im Kühlbetrieb der Transportkältemaschine 10 temporär die Heizeinrichtung 36 und/oder im Heizbetrieb der Transportkältemaschine 10 temporär den Antriebsmotor 13 zuzuschalten.

Um die angesaugte Luft L zu erwärmen, kann alternativ oder zusätzlich zu der Heizeinrichtung 36 auch vorgesehen sein, dass der Verdichter 12, der Wärmeübertrager 17, die Drosseleinrichtung 22 und der Wärmetauscher 11 in nicht dargestellter, an sich bekannter Weise nach Art einer Wärmepumpe miteinander verschaltet sind. Im Heizbetrieb der Transportkältemaschine 10 kann dann das von dem Verdichter 12 verdichtete und durch den Kältemittelausgang 16 aus dem Gehäuse 14 ausgeströmte Kältemittel dem Wärmetauscher 11 zugeführt und in diesem kondensiert werden, wobei das Kältemittel Wärme an die aus dem Laderaum 8 angesaugte Luft L abgibt und diese so erwärmt. Das in dem Wärmetauscher 11 kondensierte Kältemittel kann sodann über die Drosseleinrichtung 22, in der das Kältemittel entspannt wird, zum Wärmeübertrager 17 geleitet werden, in dem das Kältemittel unter Aufnahme von Wärme aus der Umgebung expandiert. Das in dem Wärmeübertrager 17 expandierte Kältemittel kann schließlich zum Kältemitteleingang 15 rückgeführt und nach Umströmen des Antriebsmotors 13 wieder von dem Verdichter 12 verdichtet werden. Auch bei derartigem Betrieb der Transportkältemaschine 10 kann die Steuereinrichtung 29 bedarfsweise eine Kühlmaßnahme und eine Sekundärmaßnahme zum Kühlen des Antriebsmötors 13 bewirken und beenden.

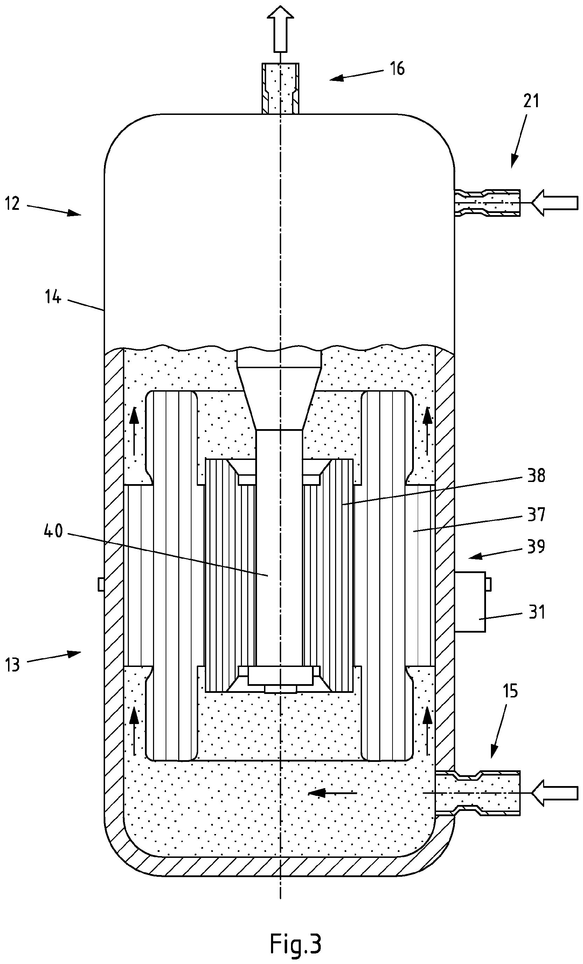

In der Fig. 3 ist das Gehäuse 14 in einer teilweise geschnittenen Ansicht von vorne dargestellt. Im unteren Bereich des Gehäuses 14 ist vorliegend der Antriebsmotor 13 angeordnet. Der Antriebsmotor 13 weist einen Stator 37 und einen Rotor 38 auf, wobei der Rotor 38 im dargestellten und insoweit bevorzugten Ausführungsbeispiel innerhalb des Stators 37 angeordnet ist. Es handelt sich also um einen Innenläufermotor. Dabei liegt der Stator 37 an dem Gehäuse 14 an, und zwar an einem Gehäuseabschnitt 39, dessen Temperatur die Messeinrichtung 31 erfasst. Der Rotor 38 ist drehfest mit einer Abtriebswelle 40 des Antriebsmotors 13 verbunden, die wiederum wenigstens im Wesentlichen drehfest mit einer nicht dargestellten Antriebswelle des ebenfalls nicht dargestellten Verdichters 12 verbunden ist. So treibt der Antriebsmotor 13 den Verdichter 12 an.

Der Kältemitteleingang 15 des Gehäuses 14 ist vorliegend in der Nähe des unteren Endes des Gehäuses 14 angeordnet. Das über den Kältemitteleingang 15 in das Gehäuse 14 eingeströmte Kältemittel umströmt den Antriebsmotor 13 und wird anschließend in den Verdichter 12 gesaugt und dort verdichtet. Dagegen strömt das über den Bypasseingang 21 in das Gehäuse 14 eingeströmte Kältemittel direkt in den Verdichter 12, ohne den Antriebsmotor 13 zu umströmen. Unabhängig davon, wie das Kältemittel in den Verdichter 12 gelangt ist, strömt es nach der Verdichtung aus dem Kältemittelausgang 16 wieder aus dem Gehäuse 14 heraus.

### Bezugszeichenliste

- 1: Kofferaufbau
- 2: Dach
- 3: Stirnwand
- 4,5: Seitenwand
- 6: Rückwand
- 7: Flügeltür
- 8: Laderaum
- 9: Boden
- 10: Transportkältemaschine
- 11: Wärmetauscher
- 12: Verdichter
- 13: Antriebsmotor
- 14: Gehäuse
- 15: Kältemitteleingang
- 16: Kältemittelausgang
- 17: Wärmeübertrager
- 18: Economizer
- 19: Economizer-Drosseleinrichtung
- 20: Economizer-Wärmetauscher
- 21: Bypasseingang
- 22: Drosseleinrichtung
- 23: Umgehungsleitung
- 24: Stellventil
- 25: Generator
- 26: Versorgungsleitung
- 27: Verbrennungsmotor
- 28: Motorsteuerung
- 29: Steuereinrichtung
- 30: Datenleitung
- 31: Messeinrichtung
- 32: Datenleitung
- 33: Strombegrenzungseinrichtung
- 34: Stromunterbrechungseinrichtung
- 35: Lüftereinheit
- 36: Heizeinrichtung
- 37: Stator
- 38: Rotor
- 39: Gehäuseabschnitt
- 40: Abtriebswelle

- L: Luft
- MB: Bypassmassenstrom
- MH: Hauptmassenstrom
- MN: Nebenmassenstrom
- N: Nutzfahrzeug
- Z: Zugmaschine

## Patentansprüche

1. Transportkältemaschine (10) zum Kühlen und/oder Heizen eines Laderaums (8) eines Kofferaufbaus (1) eines Nutzfahrzeugs (N), vorzugsweise Lastkraftwagens, Anhängers oder Sattelaufliegers,
- mit einem Wärmetauscher (11) zum Übertragen von Wärme zwischen dem Laderaum (8) und einem den Wärmetauscher (11) durchströmenden Kältemittel,
- mit einem Verdichter (12) zum Verdichten des den Wärmetauscher (11) durchströmten Kältemittels und Versorgen des Wärmetauschers (11) mit Kältemittel und
- mit einem elektrischen Antriebsmotor (13) zum Antreiben des Verdichters (12),
- wobei der Antriebsmotor (13) und der Verdichter (12) in einem gemeinsamen Gehäuse (14) aufgenommen sind und
- wobei das Gehäuse (14) wenigstens einen Kältemitteleingang (15) zum Einströmen des den Wärmetauscher (11) durchströmten Kältemittels in das Gehäuse (14) und wenigstens einen Kältemittelausgang (16) zum Ausströmen des den Antriebsmotor (13) wenigstens abschnittsweise umströmten und von dem Verdichter (12) verdichteten Kältemittels aus dem Gehäuse (14) aufweist,
**dadurch gekennzeichnet, dass**
- eine Messeinrichtung (31) zur Messung wenigstens eines für eine Motortemperatur des Antriebsmotors (13) indikativen Temperaturmesswerts und
- eine Steuereinrichtung (29) zum Bewirken wenigstens einer den Antriebsmotor (13) kühlenden Kühlmaßnahme und Beenden der Kühlmaßnahme jeweils in Abhängigkeit eines von der Messeinrichtung (31) gemessenen und für eine Motortemperatur des Antriebsmotors (13) indikativen Temperaturmesswerts vorgesehen sind und
- dass der wenigstens eine Temperaturmesswert der Messwert einer Gehäusetemperatur des Gehäuses (14) ist.

2. Transportkältemaschine nach Anspruch 1,
**dadurch gekennzeichnet, dass**
- die Steuereinrichtung (29) eingerichtet ist, die wenigstens eine Kühlmaßnahme zu bewirken, wenn der Temperaturmesswert zum Bewirken der Kühlmaßnahme größer als ein oberer Temperaturgrenzwert ist, und/oder die wenigstens eine Kühlmaßnahme zu beenden, wenn der Temperaturmesswert zum Beenden der Kühlmaßnahme kleiner als ein unterer Temperaturgrenzwert ist, und
- dass, vorzugsweise, der obere Temperaturgrenzwert, vorzugsweise wenigstens 5 K, weiter vorzugsweise wenigstens 10 K, besonders bevorzugt wenigstens 15 K, und/oder höchstens 50 K, weiter vorzugsweise höchstens 30 K, besonders bevorzugt höchstens 20 K, größer als der untere Temperaturgrenzwert ist.

3. Transportkältemaschine nach Anspruch 1 oder 2,
**dadurch gekennzeichnet, dass**
- der wenigstens eine Temperaturmesswert der Messwert einer Gehäusetemperatur des Gehäuses (14) im Bereich des Antriebsmotors (13) und/oder an einer Außenfläche des Gehäuses (14) ist und/oder
- dass der Abstand des Antriebsmotors (13) von dem zu messenden Gehäuseabschnitt (39) höchstens fünfmal, vorzugsweise höchstens dreimal, weiter vorzugsweise höchstens doppelt, so groß ist wie die Wandstärke des Gehäuses (14) in dem zu messenden Gehäuseabschnitt (39) und, vorzugsweise, der Antriebsmotor (13) an dem zu messenden Gehäuseabschnitt (39) anliegt.

4. Transportkältemaschine nach einem der Ansprüche 1 bis 3,
**dadurch gekennzeichnet, dass**
- die Messeinrichtung (31) wenigstens im Wesentlichen, vorzugsweise ausschließlich, außerhalb des Gehäuses (14) angeordnet ist und/oder
- dass das Gehäuse (14) gegen einen Überdruck von wenigstens 30 bar, weiter vorzugsweise wenigstens 60 bar, besonders bevorzugt wenigstens 80 bar, druckdicht ist.

5. Transportkältemaschine nach einem der Ansprüche 1 bis 4,
**dadurch gekennzeichnet, dass**
- die wenigstens eine Kühlmaßnahme eine Vergrößerung des den Antriebsmotor (13) umströmenden Kältemittelmassenstroms umfasst,
- dass, vorzugsweise, der Verdichter (12) einen Bypasseingang (21) zum Einströmen eines Bypassmassenstroms (MB) des Kältemittels in den Verdichter (12) unter Umgehung des Antriebsmotors (13) aufweist und die wenigstens eine Kühlmaßnahme eine Vergrößerung des den Antriebsmotor (13) umströmenden Kältemittelmassenstroms durch Verringerung des Bypassmassenstroms (MB) umfasst und
- dass, weiter vorzugsweise, der Bypasseingang (21) als Mitteldruckeingang zum Einströmen des Kältemittels in den Verdichter (12) auf einem mittleren Druckniveau ausgebildet ist.

6. Transportkältemaschine nach einem der Ansprüche 1 bis 5,
**dadurch gekennzeichnet, dass**
- ein Economizer (18) zum Übertragen von Wärme von einem dem Wärmetauscher (11) zuzuführenden Hauptmassenstrom (MH) des verdichteten Kältemittels auf einen zu dem Verdichter (12) unter Umgehung des Wärmetauschers (11) rückzuführenden Nebenmassenstrom (MN) des verdichteten Kältemittels durch Expandieren des Nebenmassenstroms (MN) vorgesehen ist und
- dass, vorzugsweise, die Steuereinrichtung (29) eingerichtet ist, die Verringerung des in den Bypasseingang (21) einströmenden Bypassmassenstroms (MB) durch eine Verringerung des Nebenmassenstroms (MN) zu bewirken.

7. Transportkältemaschine nach Anspruch 5 oder 6,
**dadurch gekennzeichnet, dass**
- die wenigstens eine Kühlmaßnahme eine Vergrößerung des den Antriebsmotor (13) umströmenden Kältemittelmassenstroms durch Vergrößerung der Drehzahl des Verdichters (12) umfasst,
- dass, vorzugsweise, ein elektrischer Generator (25) zum Versorgen des Antriebsmotors (13) mit elektrischer Antriebsenergie und ein Verbrennungsmotor (27) zum Antreiben des Generators (25) vorgesehen sind und
- die Steuereinrichtung (29) eingerichtet ist, die Vergrößerung der Drehzahl des Verdichters (12) durch eine Vergrößerung der Drehzahl des Verbrennungsmotors (27) zu bewirken.

8. Transportkältemaschine nach einem der Ansprüche 1 bis 7,
**dadurch gekennzeichnet, dass**
- wenigstens eine Strombegrenzungseinrichtung (33) zur Begrenzung der Stromstärke des dem Antriebsmotor (13) zugeführten elektrischen Stroms vorgesehen ist und, vorzugsweise, die wenigstens eine Kühlmaßnahme eine Begrenzung der Stromstärke des dem Antriebsmotor (13) zugeführten elektrischen Stroms durch die Strombegrenzungseinrichtung (33) umfasst und/oder
- dass wenigstens eine Stromunterbrechungseinrichtung (34) zum Unterbrechen der elektrischen Stromzufuhr des Antriebsmotors (13) vorgesehen ist und, vorzugsweise, die wenigstens eine Kühlmaßnahme eine Unterbrechung der elektrischen Stromzufuhr des Antriebsmotors (13) durch die Stromunterbrechungseinrichtung (34) umfasst.

9. Transportkältemaschine nach einem der Ansprüche 1 bis 8,
**dadurch gekennzeichnet, dass**
- wenigstens eine Lüftereinheit (35) zum Erzeugen eines das Gehäuse (14), vorzugsweise im Bereich des Antriebsmotors (13), wenigstens abschnittsweise umströmenden Luftstroms vorgesehen ist und
- dass, vorzugsweise, die wenigstens eine Kühlmaßnahme eine Vergrößerung der Lüfterleistung der wenigstens einen Lüftereinheit (35) umfasst.

10. Transportkältemaschine nach einem der Ansprüche 1 bis 9,
**dadurch gekennzeichnet, dass**
- eine Motorschutzeinrichtung zum Unterbrechen der elektrischen Stromzufuhr des Antriebsmotors (13) bei Überschreiten einer maximal zulässigen Motortemperatur des Antriebsmotors (13) vorgesehen ist und
- dass, vorzugsweise, die Steuereinrichtung (29) eingerichtet ist, die wenigstens eine Kühlmaßnahme, vorzugsweise wenigstens 5 K, weiter vorzugsweise wenigstens 10 K, besonders bevorzugt wenigstens 15 K, und/oder höchstens 30 K, weiter vorzugsweise höchstens 25 K, besonders bevorzugt höchstens 20 K, unterhalb der maximal zulässigen Motortemperatur zu bewirken.

11. Kofferaufbau (1) für ein Nutzfahrzeug (N), vorzugsweise Lastkraftwagen, Anhänger oder Sattelauflieger,
- mit einem Laderaum (8) zur Aufnahme von Ladung
- und mit einer Transportkältemaschine (10) zum Kühlen und/oder Heizen des Laderaums (8),
**dadurch gekennzeichnet, dass**
- die Transportkältemaschine (10) nach einem der Ansprüche 1 bis 10 ausgebildet ist.

12. Verfahren zum Betreiben einer Transportkältemaschine (10), vorzugsweise nach einem der Ansprüche 1 bis 10, mit einem Wärmetauscher (11), einem Verdichter (12) und einem den Verdichter (12) antreibenden elektrischen Antriebsmotor (13), wobei der Antriebsmotor (13) und der Verdichter (12) in einem gemeinsamen Gehäuse (14) aufgenommen sind,
- bei dem einem Kältemittel in dem Wärmetauscher (11) Wärme zugeführt und/oder entzogen wird,
- bei dem das den Wärmetauscher (11) durchströmte Kältemittel durch wenigstens einen Kältemitteleingang (15) des Gehäuses (14) in das Gehäuse (14) einströmt,
- bei dem das in das Gehäuse (14) eingeströmte Kältemittel den Antriebsmotor (13) wenigstens abschnittsweise umströmt und von dem Verdichter (12) verdichtet wird,
- bei dem das von dem Verdichter (12) verdichtete Kältemittel durch wenigstens einen Kältemittelausgang (16) des Gehäuses (14) aus dem Gehäuse (14) strömt,
- bei dem das aus dem Gehäuse (14) ausgeströmte Kältemittel dem Wärmetauscher (11) zugeführt wird,
- bei dem eine den Antriebsmotor (13) kühlende Kühlmaßnahme in Abhängigkeit eines für eine Motortemperatur des Antriebsmotors (13) indikativen Temperaturmesswerts bewirkt und in Abhängigkeit eines für eine Motortemperatur des Antriebsmotors (13) indikativen Temperaturmesswerts beendet wird und
- bei dem der wenigstens eine Temperaturmesswert der Messwert einer Gehäusetemperatur des Gehäuses (14) ist.

13. Verfahren nach Anspruch 12,
- bei dem die wenigstens eine Kühlmaßnahme bewirkt wird, wenn der Temperaturmesswert zum Bewirken der Kühlmaßnahme größer als ein oberer Temperaturgrenzwert ist, und/oder
- bei dem die wenigstens eine Kühlmaßnahme beendet wird, wenn der Temperaturmesswert zum Beenden der Kühlmaßnahme kleiner als ein unterer Temperaturgrenzwert ist.

14. Verfahren nach Anspruch 12 oder 13,
bei dem die wenigstens eine Kühlmaßnahme
- eine Vergrößerung des den Antriebsmotor (13) umströmenden Kältemittelmassenstroms, vorzugsweise durch Verringerung eines unter Umgehung des Antriebsmotors (13) in den Verdichter (12) einströmenden Bypassmassenstroms (MB) des Kältemittels und/oder durch Vergrößerung der Drehzahl des Verdichters (12),
- eine Begrenzung der Stromstärke des dem Antriebsmotors (13) zugeführten elektrischen Stroms,
- eine Unterbrechung der elektrischen Stromzufuhr des Antriebsmotors (13) und/oder
- eine Verstärkung eines das Gehäuse (14), vorzugsweise im Bereich des Antriebsmotors (13), wenigstens abschnittsweise umströmenden Luftstroms umfasst.

15. Verfahren nach einem der Ansprüche 12 bis 14,
- bei dem bei aktiver Kühlmaßnahme in Abhängigkeit eines Sekundärparameters eine den Antriebsmotor (13) kühlende Sekundärmaßnahme bewirkt wird und
- bei dem, vorzugsweise, der wenigstens eine Sekundärparameter die Zeit seit Bewirken der wenigstens einen Kühlmaßnahme und/oder einen für eine Motortemperatur des Antriebsmotors (13) indikativen Temperaturmesswert umfasst.

## Claims

1. Transport refrigerating machine (10) for cooling and/or heating a loading space (8) of a box body (1) of a utility vehicle (N), preferably a truck, trailer or semi-trailer,
- with a heat exchanger (11) for transferring heat between the loading space (8) and a refrigerant flowing through the heat exchanger (11),
- with a compressor (12) for compressing the refrigerant flowing through the heat exchanger (11) and for supplying the heat exchanger (11) with refrigerant and
- with an electric drive motor (13) for driving the compressor (12),
- wherein the drive motor (13) and the compressor (12) are accommodated in a common housing (14) and
- wherein the housing (14) has at least one refrigerant inlet (15) for the refrigerant flowing through the heat exchanger (11), to flow into the housing (14) and at least one refrigerant outlet (16) for the refrigerant flowing at least partially around the drive motor (13) and being compressed by the compressor (12) to flow out of the housing (14),
**characterized in that**
- a measuring device (31) for measuring at least one measured temperature value indicative of a motor temperature of the drive motor (13) and
- a control device (29) for effecting at least one cooling measure cooling the drive motor (13) and terminating the cooling measure respectively as a function of a measured temperature value measured by the measuring device (31) and indicative of a motor temperature of the drive motor (13) is provided, and
- that the at least one measured temperature value is the measured value of a housing temperature of the housing (14).

2. Transport refrigeration machine according to claim 1,
**characterized in that**
- the control device (29) is configured to effect the at least one cooling measure if the measured temperature value for effecting the cooling measure is greater than an upper temperature limit value, and/or to terminate the at least one cooling measure, if the measured temperature value for terminating the cooling measure is less than a lower temperature limit value, and
- that, preferably, the upper temperature limit value, preferably at least 5 K, further preferably at least 10 K, particularly preferably at least 15 K, and/or at most 50 K, further preferably at most 30 K, particularly preferably at most 20 K, is greater than the lower temperature limit value.

3. Transport refrigeration machine according to claim 1 or 2,
**characterized in that**
- the at least one measured temperature value is the measured value of a housing temperature of the housing (14) in the region of the drive motor (13) and/or on an outer surface of the housing (14) and/or
- that the distance of the drive motor (13) from the housing section (39) to be measured is at most five times, preferably at most three times, further preferably at most twice, as great as the wall thickness of the housing (14) in the housing section (39) to be measured and, preferably, the drive motor (13) is in contact with the housing section (39) to be measured.

4. Transport refrigeration machine according to one of claims 1 to 3,
**characterized in that**
- the measuring device (31) is arranged at least essentially, preferably exclusively, outside of the housing (14) and/or
- that the housing (14) is pressure-tight against an overpressure of at least 30 bar, further preferably at least 60 bar, particularly preferably at least 80 bar.

5. Transport refrigeration machine according to one of claims 1 to 4,
**characterized in that**
- the at least one cooling measure comprises an increase in the refrigerant mass flow flowing around the drive motor (13),
- that, preferably, the compressor (12) has a bypass inlet (21) for inflow of a bypass mass flow (MB) of the refrigerant into the compressor (12), while bypassing the drive motor (13), and the at least one cooling measure comprises increasing the refrigerant mass flow flowing around the drive motor (13) by reducing the bypass mass flow (MB), and
- that, further preferably, the bypass inlet (21) is configured as a medium-pressure inlet for inflow of the refrigerant into the compressor (12) at a medium pressure level.

6. Transport refrigeration machine according to one of claims 1 to 5,
**characterized in that**
- an economizer (18) is provided for transferring heat from a main mass flow (MH) of the compressed refrigerant to be supplied to the heat exchanger (11) to a secondary mass flow (MN) of the compressed refrigerant to be returned to the compressor (12) by bypassing the heat exchanger (11) by expanding the secondary mass flow (MN), and
- that, preferably, the control device (29) is configured to effect the reduction of the bypass mass flow (MB) flowing into the bypass inlet (21) by reducing the bypass mass flow (MN).

7. Transport refrigerating machine according to claim 5 or 6,
**characterized in that**
- the at least one cooling measure comprises an increase in the refrigerant mass flow flowing around the drive motor (13) by increasing the speed of the compressor (12),
- that, preferably, an electrical generator (25) for supplying the drive motor (13) with electrical drive energy and an internal combustion engine (27) for driving the generator (25) are provided and
- the control device (29) is configured to effect the increase in the speed of the compressor (12) by increasing the speed of the internal combustion engine (27).

8. Transport refrigerating machine according to one of claims 1 to 7,
**characterized in that**
- at least one current limiting device (33) is provided for limiting the current amperage of the electric current supplied to the drive motor (13) and, preferably, the at least one cooling measure comprises a limitation of the current amperage of the electric current supplied to the drive motor (13) by the current limiting device (33) and/or
- that at least one current interrupting device (34) is provided for interrupting the electric current supply of the drive motor (13) and, preferably, the at least one cooling measure comprises an interruption of the electric current supply of the drive motor (13) by the current interrupting device (34).

9. Transport refrigeration machine according to one of claims 1 to 8,
**characterized in that**
- at least one ventilation unit (35) is provided for generating an air flow flowing at least in sections around the housing (14), preferably in the region of the drive motor (13), and
- that, preferably, the at least one cooling measure comprises an increase in the ventilation power of the at least one ventilation unit (35).

10. Transport refrigerating machine according to one of claims 1 to 9,
**characterized in that**
- a motor protection device is provided for interrupting the electrical power supply of the drive motor (13) when a maximum permissible motor temperature of the drive motor (13) is exceeded and
- that, preferably, the control device (29) is configured to effect the at least one cooling measure, preferably at least 5 K, further preferably at least 10 K, particularly preferably at least 15 K, and/or at most 30 K, further preferably at most 25 K, particularly preferably at most 20 K, below the maximum permissible motor temperature.

11. Box body (1) for a utility vehicle (N), preferably a truck, trailer or semi-trailer, with a loading space (8) for accommodating cargo and with a transport refrigeration machine (10) for cooling and/or heating the loading space (8),
**characterized in that**
- the transport refrigeration machine (10) is configured according to one of claims 1 to 10.

12. Method for operating a transport refrigerating machine (10), preferably according to one of claims 1 to 10, having a heat exchanger (11), a compressor (12) and an electric drive motor (13) driving the compressor (12), wherein the drive motor (13) and the compressor (12) are accommodated in a common housing (14),
- in which heat is supplied to and/or extracted from a refrigerant in the heat exchanger (11),
- in which the refrigerant flowing through the heat exchanger (11) flows into the housing (14) through at least one refrigerant inlet (15) of the housing (14),
- in which the refrigerant flowing into the housing (14) flows around the drive motor (13) at least partially and is compressed by the compressor (12),
- in which the refrigerant compressed by the compressor (12) flows out of the housing (14) through at least one refrigerant outlet (16) of the housing (14),
- in which the refrigerant flowing out of the housing (14) is fed to the heat exchanger (11),
- in which a cooling measure cooling the drive motor (13) is effected as a function of a temperature measured value indicative of a motor temperature of the drive motor (13) and is terminated as a function of a temperature measured value indicative of a motor temperature of the drive motor (13), and
- in which the at least one temperature measured value is the measured value of a housing temperature of the housing (14).

13. Method according to claim 12,
- in which the at least one cooling measure is effected when the temperature measured value for effecting the cooling measure is greater than an upper temperature limit value, and/or
- in which the at least one cooling measure is terminated when the temperature measured value for terminating the cooling measure is less than a lower temperature limit value.

14. Method according to claim 12 or 13,
in which the at least one cooling measure is
- an increase in the refrigerant mass flow flowing around the drive motor (13), preferably by reducing a bypass mass flow (MB) of the refrigerant flowing into the compressor (12) while bypassing the drive motor (13) and/or by increasing the speed of the compressor (12),
- a limitation of the current amperage of the electric current supplied to the drive motor (13),
- an interruption of the electric current supply of the drive motor (13) and/or
- an increase of an air flow at least partially flowing around the housing (14), preferably in the region of the drive motor (13).

15. Method according to one of claims 12 to 14,
- in which, when a cooling measure is active, a secondary measure cooling the drive motor (13) is effected as a function of a secondary parameter and
- in which, preferably, the at least one secondary parameter comprises the time since the at least one cooling measure was effected and/or a temperature measurement value indicative of a motor temperature of the drive motor (13).

## Revendications

1. Machine frigorifique de transport (10) pour refroidir et/ou chauffer un espace de chargement (8) d'une caisse (1) d'un véhicule utilitaire (N), de préférence un camion, une remorque ou une semi-remorque,
- avec un échangeur de chaleur (11) pour transfert de chaleur entre l'espace de chargement (8) et un fluide frigorigène traversant l'échangeur de chaleur (11),
- avec un compresseur (12) pour comprimer le fluide frigorigène traversant l'échangeur de chaleur (11) et pour alimenter l'échangeur de chaleur (11) en fluide frigorigène et
- avec un moteur d'entraînement électrique (13) pour entraîner le compresseur (12),
- où le moteur d'entraînement (13) et le compresseur (12) sont logés dans un boîtier commun (14) et
- où le boîtier (14) a au moins une entrée de fluide frigorigène (15) pour un afflux du fluide frigorigène traversant l'échangeur de chaleur (11) dans le boîtier (14) et au moins une sortie de fluide frigorigène (16) pour une évacuation du fluide frigorigène entourant au moins partiellement le moteur d'entraînement (13) et comprimé par le compresseur (12) hors du boîtier (14),
**caractérisé en ce que**
- un dispositif de mesure (31) pour mesurer au moins une valeur de mesure de température indicative d'une température de moteur du moteur d'entraînement (13) et
- un dispositif de commande (29) pour effectuer au moins une mesure de refroidissement refroidissant le moteur d'entraînement (13) et pour terminer la mesure de refroidissement respectivement en fonction d'une valeur de mesure de température mesurée par le dispositif de mesure (31) et indicative d'une température de moteur du moteur d'entraînement (13) sont prévus et
- que la au moins une valeur de mesure de température est la valeur de mesure d'une température de boîtier du boîtier (14).

2. Machine frigorifique de transport selon la revendication 1,
**caractérisée en ce que**
- le dispositif de commande (29) est configuré pour effectuer la au moins une mesure de refroidissement lorsque la valeur de mesure de température pour effectuer la mesure de refroidissement est supérieure à une valeur limite de température supérieure, et/ou pour terminer la au moins une mesure de refroidissement, lorsque la valeur de mesure de température pour terminer la mesure de refroidissement est inférieure à une valeur limite de température inférieure, et
- que, de préférence, la valeur limite de température supérieure est supérieure à la valeur limite de température inférieure, de préférence au moins 5 K, de préférence encore au moins 10 K, de préférence encore au moins 15 K, et/ou au maximum 50 K, de préférence encore au maximum 30 K, de préférence encore au maximum 20 K.

3. Machine frigorifique de transport selon la revendication 1 ou 2,
**caractérisée en ce que**
- la au moins une valeur de mesure de température est la valeur de mesure d'une température de boîtier du boîtier (14) dans la zone du moteur d'entraînement (13) et/ou sur une surface extérieure du boîtier (14) et/ou
- que la distance entre le moteur d'entraînement (13) et la section de boîtier à mesurer (39) vaut au maximum cinq fois, de préférence au maximum trois fois, de préférence encore au maximum deux fois, l'épaisseur de paroi du boîtier (14) dans la section de boîtier (39) à mesurer et, de préférence, le moteur d'entraînement (13) est en contact avec la section de boîtier (39) à mesurer.

4. Machine frigorifique de transport selon l'une des revendications 1 à 3,
**caractérisée en ce que**
- le dispositif de mesure (31) est disposé au moins essentiellement, de préférence exclusivement, à l'extérieur du boîtier (14) et/ou
- que le carter (14) est étanche à une surpression d'au moins 30 bars, de préférence d'au moins 60 bars, de préférence encore d'au moins 80 bars.

5. Machine frigorifique de transport selon l'une des revendications 1 à 4,
**caractérisée en ce que**
- la au moins une mesure de refroidissement comprend une augmentation de débit massique de réfrigérant circulant autour du moteur d'entraînement (13),
- que, de préférence, le compresseur (12) a une entrée de dérivation (21) pour écoulement d'un débit massique de dérivation (MB) du fluide frigorigène dans le compresseur (12) en contournant le moteur d'entraînement (13) et l'au moins une mesure de refroidissement comprend une augmentation du débit massique de fluide frigorigène circulant autour du moteur d'entraînement (13) par réduction du débit massique de dérivation (MB) et
- que, de préférence encore, l'entrée de dérivation (21) est configurée comme une entrée à moyenne pression pour écoulement du fluide frigorigène dans le compresseur (12) à un niveau de pression moyen.

6. Machine frigorifique de transport selon l'une des revendications 1 à 5,
**caractérisée en ce**
- **qu'**un économiseur (18) est prévu pour transférer de la chaleur d'un flux massique principal (MH) du fluide frigorigène comprimé à amener à l'échangeur de chaleur (11) à un flux massique secondaire (MN) du fluide frigorigène comprimé à ramener au compresseur (12) en contournant l'échangeur de chaleur (11) par expansion du flux massique secondaire (MN) et
- **que**, de préférence, le dispositif de commande (29) est configuré pour effectuer la réduction du débit massique de dérivation (MB) entrant dans l'entrée de dérivation (21) par une réduction du débit massique auxiliaire (MN).

7. Machine frigorifique de transport selon la revendication 5 ou 6,
**caractérisée en ce que**
- la au moins une mesure de refroidissement comprend une augmentation du débit massique de réfrigérant circulant autour du moteur d'entraînement (13) par augmentation de la vitesse de rotation du compresseur (12),
- que, de préférence, un générateur électrique (25) est prévu pour alimenter le moteur d'entraînement (13) en énergie électrique d'entraînement et un moteur à combustion interne (27) est prévu pour entraîner le générateur (25) et
- le dispositif de commande (29) est configuré pour effectuer l'augmentation de la vitesse de rotation du compresseur (12) par une augmentation de la vitesse de rotation du moteur à combustion interne (27).

8. Machine frigorifique de transport selon l'une des revendications 1 à 7,
**caractérisée en ce**
- **qu'**au moins un dispositif de limitation de courant (33) est prévu pour limiter l'intensité du courant électrique amené au moteur d'entraînement (13) et, de préférence, la au moins une mesure de refroidissement comprend une limitation de l'intensité du courant électrique amené au moteur d'entraînement (13) par le dispositif de limitation de courant (33) et/ou
- **qu'**au moins un dispositif d'interruption de courant (34) est prévu pour interrompre l'alimentation en courant électrique du moteur d'entraînement (13) et, de préférence, la au moins une mesure de refroidissement comprend une interruption de l'alimentation en courant électrique du moteur d'entraînement (13) par le dispositif d'interruption de courant (34).

9. Machine frigorifique de transport selon l'une des revendications 1 à 8,
**caractérisée en ce**
- **qu'**au moins une unité de ventilation (35) est prévue pour produire un courant d'air circulant au moins partiellement autour du boîtier (14), de préférence dans la zone du moteur d'entraînement (13), et
- **que**, de préférence, l'au moins une mesure de refroidissement comprend une augmentation de la puissance de ventilation de l'au moins une unité de ventilation (35).

10. Machine frigorifique de transport selon l'une des revendications 1 à 9,
**caractérisée en ce**
- **qu'**il est prévu un dispositif de protection du moteur pour interrompre l'alimentation en courant électrique du moteur d'entraînement (13) en cas de dépassement d'une température maximale admissible du moteur d'entraînement (13) et
- **que**, de préférence, le dispositif de commande (29) est configuré pour effectuer au moins une mesure de refroidissement, de préférence au moins 5 K, de préférence encore au moins 10 K, de préférence encore au moins 15 K, et/ou au maximum 30 K, de préférence encore au maximum 25 K, de préférence encore au maximum 20 K, en dessous de la température maximale admissible du moteur.

11. Caisse (1) pour un véhicule utilitaire (N), de préférence un camion, une remorque ou une semi-remorque, avec un espace de chargement (8) pour recevoir un chargement et avec une machine frigorifique de transport (10) pour refroidir et/ou chauffer l'espace de chargement (8),
**caractérisée en ce**
- **que** la machine frigorifique de transport (10) est configurée selon l'une des revendications 1 à 10.

12. Procédé pour exploiter une machine frigorifique de transport (10), de préférence selon l'une des revendications 1 à 10, avec un échangeur de chaleur (11), un compresseur (12) et un moteur d'entraînement électrique (13) entraînant le compresseur (12), où le moteur d'entraînement (13) et le compresseur (12) sont logés dans un boîtier commun (14),
- dans lequel de la chaleur est amenée et/ou extraite d'un fluide frigorigène dans l'échangeur de chaleur (11),
- dans lequel le fluide frigorigène traversant l'échangeur de chaleur (11) s'écoule dans le boîtier (14) par au moins une entrée de fluide frigorigène (15) du boîtier (14),
- dans lequel le fluide frigorigène s'écoulant dans le boîtier (14) entoure au moins partiellement le moteur d'entraînement (13) et est comprimé par le compresseur (12),
- dans lequel le fluide frigorigène comprimé par le compresseur (12) s'écoule hors du boîtier (14) par au moins une sortie de fluide frigorigène (16) du boîtier (14),
- dans lequel le fluide frigorigène s'écoulant hors du boîtier (14) est amené à l'échangeur de chaleur (11),
- dans lequel une mesure de refroidissement refroidissant le moteur d'entraînement (13) est effectuée en fonction d'une valeur de mesure de température indicative d'une température de moteur du moteur d'entraînement (13) et est terminée en fonction d'une valeur de mesure de température indicative d'une température de moteur du moteur d'entraînement (13) et
- dans lequel la au moins une valeur de mesure de température est la valeur de mesure d'une température de boîtier du boîtier (14).

13. Procédé selon la revendication 12,
- dans lequel la au moins une mesure de refroidissement est effectuée lorsque la valeur de mesure de température pour effectuer la mesure de refroidissement est supérieure à une valeur limite de température supérieure, et/ou
- dans lequel ladite au moins une mesure de refroidissement est terminée lorsque la valeur de mesure de température pour terminer la mesure de refroidissement est inférieure à une valeur limite de température inférieure.

14. Procédé selon la revendication 12 ou 13,
dans lequel la au moins une mesure de refroidissement
- comprend une augmentation du débit massique de réfrigérant circulant autour du moteur d'entraînement (13), de préférence par réduction d'un débit massique de dérivation (MB) du réfrigérant circulant dans le compresseur (12) en contournant le moteur d'entraînement (13) et/ou par augmentation de la vitesse de rotation du compresseur (12),
- une limitation de l'intensité du courant électrique amené au moteur d'entraînement (13),
- une interruption de l'alimentation en courant électrique du moteur d'entraînement (13) et/ou
- une amplification d'un flux d'air circulant au moins partiellement autour du boîtier (14), de préférence dans la zone du moteur d'entraînement (13).

15. Procédé selon l'une des revendications 12 à 14,
- dans lequel, lorsque la mesure de refroidissement est active, une mesure secondaire refroidissant le moteur d'entraînement (13) est effectuée en fonction d'un paramètre secondaire, et
- dans lequel, de préférence, ledit au moins un paramètre secondaire comprend le temps écoulé depuis effectuer la au moins une mesure de refroidissement et/ou une valeur de mesure de température indicative d'une température du moteur d'entraînement (13).
